# EUROPEAN PATENT APPLICATION

(11) **EP 3 244 357 A1**
(43) Date of publication of application: **15.11.2017**
(21) Application number: 17165230.8
(22) Date of filing: 06.04.2017
(51) Int. Cl.: G06Q 20/20

(54) **ELECTRONIC APPARATUS PROVIDING ELECTRONIC PAYMENT AND OPERATING METHOD THEREOF**

(30) Priority: 13.05.2016 KR 20160058606
(71) Applicant: Samsung Electronics Co., Ltd., Gyeonggi-do 16677 (KR)
(72) Inventor: Canh, Nguyen Van, Suwon-si (KR)
(74) Representative: Nederlandsch Octrooibureau

(57) **Abstract**

According to various example embodiments, an electronic device may include a communication module comprising communication circuitry, a short-range communication module comprising short-range communication circuitry, a One Time Password (OTP) module comprising OPT circuitry configured to generate an OTP, and a processor operatively coupled to the communication module and the short-range communication module. The processor may be configured to request an offline payment registration by transmitting an IDentification (ID) of the OTP module via the communication module, to receive an account ID based on the offline payment registration, and to store the account ID, and to generate the OTP via the OTP module at a time of an offline payment, to generate a token based on the generated OTP and the account ID, and to transmit the generated token to a Point On Sale (POS) terminal via the short-range communication module to perform a payment.

Other various example embodiments are also possible.

## Description

### BACKGROUND

### 1. Field of the Disclosure

The present disclosure relates generally to an electronic device and an operating method thereof, and for example, to an electronic device including execution environments for providing an offline electronic payment function and an operating method thereof.

### 2. Description of Related Art

With the development of mobile communication technologies, an electronic device may perform not only a voice telephony function but also various data communication functions. The electronic device, for example, a mobile device or a user device, may provide various services through various applications. The electronic device may provide a multimedia service such as a music service, a video service, or a digital broadcasting service, or may provide a network-based communication service or the like such as telephony, wireless internet, a Short Message Service (SMS), a Multimedia Messaging Service (MMS), or the like. Further, the electronic device which has been evolved from a simple communication medium to a device capable of performing various functions such as communication, distribution, Internet, payment, or the like may be used throughout society, culture, finance, or distribution industry.

The electronic device may provide, for example, a mobile payment scheme in which a payment function is performed by using the electronic device. A payment scheme has been evolved from using cash to using plastic cards, and the electronic device may provide, for example, a payment scheme using the electronic device. The electronic device may use, for example, a mobile payment service to provide a payment function for purchasing goods and services by using the electronic device. Further, the electronic device may have, for example, a communication function for receiving or transmitting payment information.

In the aforementioned electronic device and operating method thereof, the electronic device is necessarily connected with a Payment Service Network (PSN) to exchange a token before paying for goods and/or services. Therefore, if a user is out of an Internet service region (e.g., if the user stays abroad or cannot temporarily use a data service), a mobile payment may be limited. Further, a lagging trouble may be caused during the electronic device initializes a payment operation through an Internet connection.

A money transfer between users through the electronic device may be very important in modern life. If the money is transferred by using the electronic device, the money may be delivered to an account of a recipient by being deducted from an account of a sender at the time of the transfer. This may refer, for example, to a situation in which the sender needs to immediately transfer the money, and cannot observe or control how and when the user who receives the money uses the money.

### SUMMARY

According to various example embodiments of the present disclosure, there may be provided an apparatus and method in which an electronic device performs an offline electronic payment based on a one-time password or a pre-register token procedure.

According to various example embodiments of the present disclosure, there may be provided an apparatus and method in which a first electronic device transmits post-payment information capable of sharing money to a second electronic device, and the first electronic device confirms this when the second electronic device performs a payment operation.

According to various example embodiments of the present disclosure, there may be provided an apparatus and method in which an electronic device receives card information related to a payment at the time of payment, and perform the payment by selecting a favorite card for the payment.

According to various example embodiments, an electronic device may include a communication module comprising communication circuitry, a short-range communication module comprising short-range communication circuitry, a One Time Password (OTP) module comprising circuitry configured to generate an OTP, and a processor operatively coupled to the communication module and the short-range communication module. The processor may be configured to request for an offline payment registration by transmitting an IDentification (ID) of the OTP module via the communication module, to receive an account ID based on the offline payment registration, to store the account ID, and to generate the OTP via the OTP module at the time of an offline payment, to generate a token based on the generated OTP and the account ID, and to transmit the generated token to a Point Of Sale (POS) terminal via the short-range communication module to perform a payment.

According to various example embodiments of the present disclosure, a method of operating an electronic device may include a payment information register operation for requesting for an offline payment registration by transmitting an ID of an OTP module for an offline payment, receiving an account ID based on the transmission of the OTP ID, storing the account ID, and an offline payment operation for generating the OTP at the time of the offline payment, generating a token based on the generated OTP and the account ID, and transmitting the generated token to a POS terminal.

According to various example embodiments, a method of processing an offline payment of an electronic device by a payment service system may include a payment register operation for transmitting an account ID corresponding to an OTP module to the electronic device upon receiving the ID of the OTP module from the electronic device, and for storing the transmitted account ID, and an offline payment operation for verifying the OTP and the account ID upon receiving a token including the OTP and the account ID, and for approving the payment if the token is valid.

### BRIEF DESCRIPTION OF THE DRAWINGS

The above and other aspects, features and attendant advantages of the present disclosure will be apparent and more readily appreciated from the following detailed description, taken in conjunction with the accompanying drawings, in which like reference numerals refer to like elements, and wherein:
FIG. 1 is a diagram illustrating an example electronic device in a network environment according to various example embodiments;
FIG. 2 is a block diagram illustrating an example electronic device according to various example embodiments;
FIG. 3 is a block diagram illustrating an example program module according to various example embodiments;
FIG. 4 is a block diagram illustrating an example structure of a payment system according to various example embodiments;
FIG. 5 is a block diagram illustrating an example structure of an electronic device according to various example embodiments;
FIG. 6 is a flowchart illustrating an example procedure of performing an offline payment operation by an electronic device according to various example embodiments of the present disclosure;
FIG. 7 is a flowchart illustrating an example offline payment operation of a payment system according to various example embodiments of the present disclosure;
FIG. 8 is a flowchart illustrating an example procedure of verifying a token including a one-time password in a payment service network according to various example embodiments of the present disclosure;
FIG. 9 is a flowchart illustrating an example offline payment operation of an electronic device according to various example embodiments of the present disclosure;
FIG. 10 is a flowchart illustrating an example operation of performing an offline payment by pre-registering a token in a payment system according to various example embodiments of the present disclosure;
FIG. 11 is a flowchart illustrating an example offline payment operation of an electronic device according to various example embodiments of the present disclosure;
FIG. 12A and FIG. 12B are flowcharts illustrating an example method of sharing postpaid money in a payment system according to various example embodiments of the present disclosure;
FIG. 13A and FIG. 13B are flowcharts illustrating an example method in which a first electronic device sets post-money sharing, and a second electronic device performs a payment using the post-money sharing according to various example embodiments of the present disclosure;
FIG. 14A, FIG. 14B and FIG. 14C are diagrams illustrating an example of selecting a credit card on the basis of payment and card preferences according to various example embodiments of the present disclosure;
FIG. 15 is a flowchart illustrating a method in which a payment system selects a card to pay according to various example embodiments of the present disclosure;
FIG. 16 is a diagram illustrating an example method of selecting a payment card in a payment system according to various example embodiments of the present disclosure; and
FIG. 17 is a flowchart illustrating an example procedure of performing a payment operation using a best card through a payment modeling scheme in a payment system according to various example embodiments of the present disclosure.

### DETAILED DESCRIPTION

Hereinafter, various example embodiments of the present disclosure will be described with reference to the accompanying drawings. However, it should be understood that there is no intent to limit the present disclosure to the particular forms disclosed herein; rather, the present disclosure should be understood to cover various modifications, equivalents, and/or alternatives of embodiments of the present disclosure. In describing the drawings, similar reference numerals may be used to designate similar constituent elements.

As used herein, the expression "have", "may have", "include", or "may include" refers to the existence of a corresponding feature (e.g., numeral, function, operation, or constituent element such as component), and does not exclude one or more additional features.

In the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including both at least one A and at least one B.

The expression "a first", "a second", "the first", or "the second" used in various embodiments of the present disclosure may modify various components regardless of the order and/or the importance but does not limit the corresponding components. For example, a first user device and a second user device indicate different user devices although both of them are user devices. For example, a first element may be termed a second element, and similarly, a second element may be termed a first element without departing from the scope of the present disclosure.

It should be understood that when an element (e.g., first element) is referred to as being (operatively or communicatively) "connected," or "coupled," to another element (e.g., second element), it may be directly connected or coupled directly to the other element or any other element (e.g., third element) may be interposed between them. In contrast, it may be understood that when an element (e.g., first element) is referred to as being "directly connected," or "directly coupled" to another element (second element), there are no element (e.g., third element) interposed between them.

The expression "configured to" used in the present disclosure may be used interchangeably with, for example, "suitable for", "having the capacity to", "designed to", "adapted to", "made to", or "capable of" according to the situation. The term "configured to" may not necessarily imply "specifically designed to" in hardware. Alternatively, in some situations, the expression "device configured to" may denote that the device, together with other devices or components, "is able to". For example, the phrase "processor adapted (or configured) to perform A, B, and C" may refer to a dedicated processor (e.g. embedded processor) only for performing the corresponding operations or a generic-purpose processor (e.g., central processing unit (CPU) or application processor (AP)) that can perform the corresponding operations by executing one or more software programs stored in a memory device.

The terms used herein are merely for the purpose of describing particular embodiments and are not intended to limit the scope of other embodiments. As used herein, singular forms may include plural forms as well unless the context clearly indicates otherwise. Unless defined otherwise, all terms used herein, including technical and scientific terms, have the same meaning as those commonly understood by a person skilled in the art to which the present disclosure pertains. Such terms as those defined in a generally used dictionary may be interpreted to have the meanings equal to the contextual meanings in the relevant field of art, and are not to be interpreted to have ideal or excessively formal meanings unless clearly defined in the present disclosure. In some cases, even if the term is defined in the present disclosure, it should not be interpreted to exclude embodiments of the present disclosure.

An electronic device according to various embodiments of the present disclosure may include at least one of, for example, a smart phone, a tablet Personal Computer (PC), a mobile phone, a video phone, an electronic book reader (e-book reader), a desktop PC, a laptop PC, a netbook computer, a workstation, a server, a Personal Digital Assistant (PDA), a Portable Multimedia Player (PMP), a MPEG-1 audio layer-3 (MP3) player, a mobile medical device, a camera, and a wearable device, or the like, but is not limited thereto. According to various embodiments, the wearable device may include at least one of an accessory type (e.g., a watch, a ring, a bracelet, an anklet, a necklace, a glasses, a contact lens, or a Head-Mounted Device (HMD)), a fabric or clothing integrated type (e.g., an electronic clothing), a body-mounted type (e.g., a skin pad, or tattoo), and a bio-implantable type (e.g., an implantable circuit), or the like, but is not limited thereto.

According to some embodiments, the electronic device may be a home appliance. The home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame, or the like, but is not limited thereto.

According to another embodiment, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.), or the like, but is not limited thereto.

According to some embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter), or the like, but is not limited thereto. The electronic device according to various embodiments of the present disclosure may be a combination of one or more of the aforementioned various devices. The electronic device according to some embodiments of the present disclosure may be a flexible device. Further, the electronic device according to an embodiment of the present disclosure is not limited to the aforementioned devices, and may include a new electronic device according to the development of technology.

Hereinafter, an electronic device according to various embodiments will be described with reference to the accompanying drawings. As used herein, the term "user" may indicate a person who uses an electronic device or a device (e.g., an artificial intelligence electronic device) that uses an electronic device.

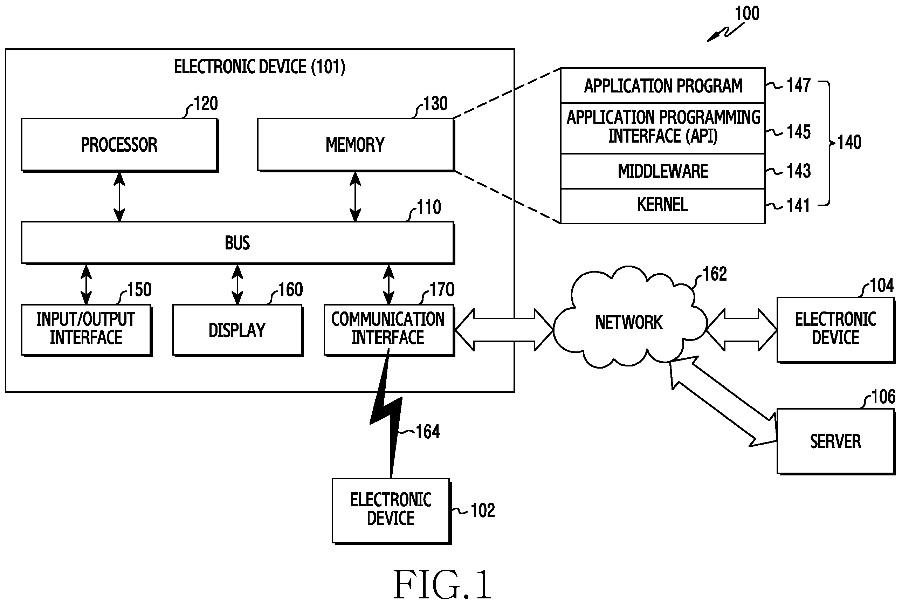

FIG. 1 is a diagram illustrating an example electronic device in a network environment according to various example embodiments of the present disclosure.

An electronic device 101 within a network environment 100, according to various embodiments, will be described with reference to FIG. 1. The electronic device 101 may include a bus 110, a processor (e.g., including processing circuitry) 120, a memory 130, an input/output interface (e.g., including input/output circuitry) 150, a display 160, and a communication interface (e.g., including interface circuitry) 170. In some embodiments, the electronic device 101 may omit at least one of the above elements or may further include other elements.

The bus 110 may include, for example, a circuit for connecting the elements 110 -170 and transferring communication (e.g., control messages and/or data) between the elements.

The processor 120 may include various processing circuitry, such as, for example, and without limitation, one or more of a dedicated processor, a Central Processing Unit (CPU), an Application Processor (AP), and a Communication Processor (CP). The processor 120, for example, may carry out operations or data processing relating to control and/or communication of at least one other element of the electronic device 101.

The memory 130 may include a volatile memory and/or a non-volatile memory. The memory 130 may store, for example, instructions or data relevant to at least one other element of the electronic device 101. According to an embodiment, the memory 130 may store software and/or a program 140. The program 140 may include, for example, a kernel 141, middleware 143, an Application Programming Interface (API) 145, and/or application programs (or "applications") 147. At least some of the kernel 141, the middleware 143, and the API 145 may be referred to as an Operating System (OS).

The kernel 141 may control or manage system resources (e.g., the bus 110, the processor 120, or the memory 130) used for performing an operation or function implemented by the other programs (e.g., the middleware 143, the API 145, or the application programs 147). Furthermore, the kernel 141 may provide an interface through which the middleware 143, the API 145, or the application programs 147 may access the individual elements of the electronic device 101 to control or manage the system resources.

The middleware 143, for example, may function as an intermediary for allowing the API 145 or the application programs 147 to communicate with the kernel 141 to exchange data.

In addition, the middleware 143 may process one or more operation requests received from the application program 147 according to priority. For example, the middleware 143 may give priority to use the system resources of the electronic device 101 (for example, the bus 110, the processor 120, the memory 130, and the like) to at least one of the application programs 147. For example, the middleware 143 may perform scheduling or load balancing with respect to the one or more operation requests by processing the one or more operation requests according to the priority given to the at least one application program.

The API 145 is an interface through which the applications 147 control functions provided from the kernel 141 or the middleware 143, and may include, for example, at least one interface or function (e.g., instruction) for file control, window control, image processing, or text control.

The input/output interface 150, for example, may include various input/output circuitry and may function as an interface that may transfer instructions or data input from a user or another external device to the other element(s) of the electronic device 101. Furthermore, the input/output interface 150 may output the instructions or data received from the other element(s) of the electronic device 101 to the user or another external device.

The display 160 may include, for example, a Liquid Crystal Display (LCD), a Light Emitting Diode (LED) display, an Organic Light Emitting Diode (OLED) display, a Micro Electro Mechanical System (MEMS) display, or an electronic paper display, or the like, but is not limited thereto. The display 160, for example, may display various types of content (e.g., text, images, videos, icons, or symbols) for the user. The display 160 may include a touch screen and receive, for example, a touch, gesture, proximity, or hovering input using an electronic pen or the user's body part.

The communication interface 170, for example, may include various communication circuitry and may set communication between the electronic device 101 and an external device (e.g., the first external electronic device 102, the second external electronic device 104, or a server 106). For example, the communication interface 170 may be connected to a network 162 through wireless or wired communication to communicate with the external device (e.g., the second external electronic device 104 or the server 106).

The wireless communication may use at least one of, for example, Long Term Evolution (LTE), LTE-Advance (LTE-A), Code Division Multiple Access (CDMA), Wideband CDMA (WCDMA), Universal Mobile Telecommunications System (UMTS), WiBro (Wireless Broadband), and Global System for Mobile Communications (GSM), as a cellular communication protocol. In addition, the wireless communication may include, for example, short range communication 164. The short-range communication 164 may be performed by using at least one of, for example, Wi-Fi, Bluetooth, Bluetooth low energy (BLE), Near Field Communication (NFC), and Global Navigation Satellite System (GNSS). The GNSS may include at least one of, for example, a Global Positioning System (GPS), a Global Navigation Satellite System (Glonass), a Beidou Navigation Satellite System (hereinafter referred to as "Beidou"), and a European Global Satellite-based Navigation System (Galileo), according to a use area, a bandwidth, or the like. Hereinafter, in the present disclosure, the "GPS" may be interchangeably used with the "GNSS". The wired communication may include at least one of, for example, a Universal Serial Bus (USB), a High Definition Multimedia Interface (HDMI), Recommended Standard 232 (RS-232), and a Plain Old Telephone Service (POTS). The network 162 may include at least one of a communication network such as a computer network (e.g., a LAN or a WAN), the Internet, and a telephone network.

Each of the first and second external electronic apparatuses 102 and 104 may be of a type identical to or different from that of the electronic apparatus 101. According to an embodiment, the server 106 may include a group of one or more servers. According to various embodiments, all or some of the operations performed in the electronic device 101 may be performed in another electronic device or a plurality of electronic devices (e.g., the electronic devices 102 and104 or the server 106). According to an embodiment, when the electronic device 101 has to perform some functions or services automatically or in response to a request, the electronic device 101 may make a request for performing at least some functions relating thereto to another device (e.g., the electronic device 102 or 104 or the server 106) instead of performing the functions or services by itself or in addition. Another electronic apparatus may execute the requested functions or the additional functions, and may deliver a result of the execution to the electronic apparatus 101. The electronic device 101 may process the received result as it is or additionally to provide the requested functions or services. To achieve this, for example, cloud computing, distributed computing, or client-server computing technology may be used.

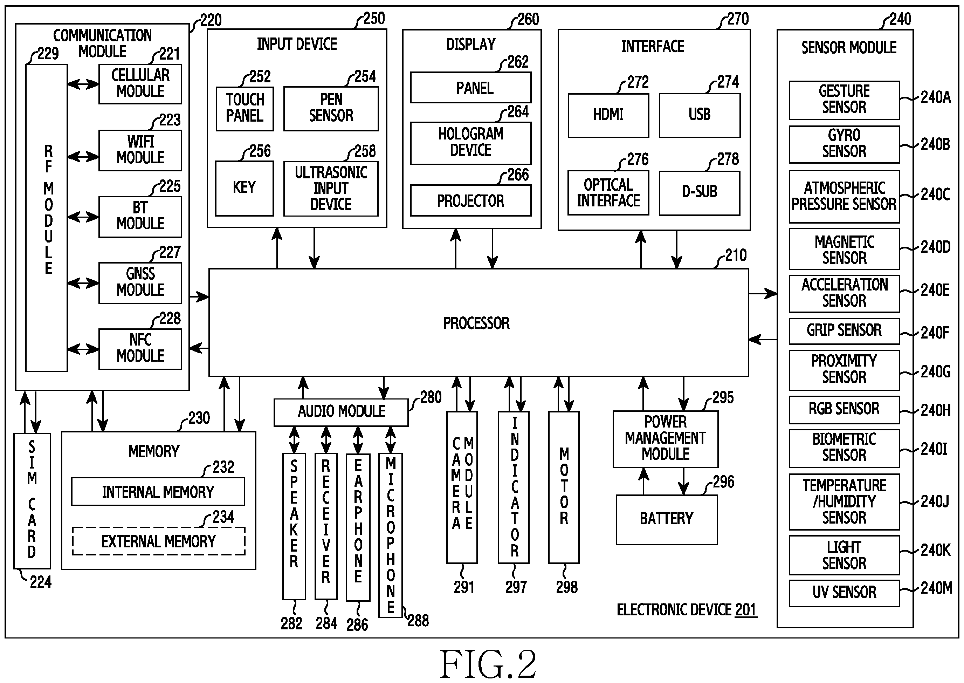

FIG. 2 is a block diagram illustrating an example electronic device according to various example embodiments of the present disclosure.

FIG. 2 is a block diagram of an electronic device 201 according to various embodiments. For example, the electronic apparatus 201 may include the whole or part of the electronic apparatus 101 illustrated in FIG. 1. The electronic device 201 may include at least one processor (e.g., Application Processor (AP)) (e.g., including processing circuitry) 210, a communication module (e.g., including communication circuitry) 220, a Subscriber Identification Module (SIM) 224, a memory 230, a sensor module 240, an input device (e.g., including input circuitry) 250, a display 260, an interface (e.g., including interface circuitry) 270, an audio module 280, a camera module 291, a power management module 295, a battery 296, an indicator 297, and a motor 298.

The processor 210 may include various processing circuitry and control a plurality of hardware or software components connected to the processor 210 by driving an operating system or an application program and perform processing of various pieces of data and calculations. The processor 210 may be implemented by, for example, a System on Chip (SoC). According to an embodiment, the processor 210 may further include a Graphic Processing Unit (GPU) and/or an image signal processor. The processor 210 may include at least some (e.g., a cellular module 221) of the elements illustrated in FIG. 2. The processor 210 may load, into a volatile memory, instructions or data received from at least one (e.g., a non-volatile memory) of the other elements and may process the loaded instructions or data, and may store various data in a non-volatile memory.

The communication module 220 may have a configuration equal or similar to that of the communication interface 170 of FIG. 1. The communication module 220 may include various communication circuitry, such as, for example, and without limitation, a cellular module 221, a Wi-Fi module 223, a Bluetooth (BT) module 225, a GNSS module 227 (e.g., a GPS module, a Glonass module, a Beidou module, or a Galileo module), an NFC module 228, and a Radio Frequency (RF) module 229.

The cellular module 221 may provide a voice call, image call, a text message service, or an Internet service through, for example, a communication network. According to an embodiment, the cellular module 221 may distinguish between and authenticate electronic devices 201 within a communication network using a subscriber identification module (for example, the SIM card 224). According to an embodiment of the present disclosure, the cellular module 221 may perform at least some of the functions that the processor 210 may provide. According to an embodiment, the cellular module 221 may include a Communication Processor (CP).

Each of the Wi-Fi module 223, the BT module 225, the GNSS module 227, and the NFC module 228 may include, for example, a processor for processing data transmitted and received through the relevant module. According to some embodiments of the present disclosure, at least some (e.g., two or more) of the cellular module 221, the Wi-Fi module 223, the BT module 225, the GNSS module 227, and the NFC module 228 may be included in one Integrated Chip (IC) or IC package.

The RF module 229 may transmit/receive, for example, a communication signal (for example, an RF signal). The RF module 229 may include, for example, a transceiver, a Power Amplifier Module (PAM), a frequency filter, a Low Noise Amplifier (LNA), and an antenna. According to another embodiment of the present disclosure, at least one of the cellular module 221, the Wi-Fi module 223, the BT module 225, the GNSS module 227, and the NFC module 228 may transmit and receive RF signals through a separate RF module.

The subscriber identification module 224 may include, for example, a card including a subscriber identity module and/or an embedded SIM, and may contain unique identification information (e.g., an Integrated Circuit Card Identifier (ICCID)) or subscriber information (e.g., an International Mobile Subscriber Identity (IMSI)).

The memory 230 (for example, the memory 130) may include, for example, an internal memory 232 and/or an external memory 234. The embedded memory 232 may include at least one of a volatile memory (for example, a Dynamic Random Access Memory (DRAM), a Static RAM (SRAM), a Synchronous Dynamic RAM (SDRAM), and the like) and a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a flash memory (for example, a NAND flash memory or a NOR flash memory), a hard disc drive, a Solid State Drive (SSD), and the like).

The external memory 234 may further include a flash drive, for example, a Compact Flash (CF), a Secure Digital (SD), a Micro Secure Digital (Micro-SD), a Mini Secure Digital (Mini-SD), an eXtreme Digital (xD), a memory stick, or the like. The external memory 234 may be functionally and/or physically connected to the electronic apparatus 201 through various interfaces.

The sensor module 240 may measure a physical quantity or detect an operation state of the electronic device 201, and may convert the measured or detected information into an electrical signal. For example, the sensor module 240 may include at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (for example, a Red/Green/Blue (RGB) sensor), a bio-sensor (e.g., a biometric sensor) 240I, a temperature/humidity sensor 240J, a light sensor 240K, and an Ultra Violet (UV) sensor 240M. Additionally or alternatively, the sensor module 240 may include, for example, an E-nose sensor, an electromyography (EMG) sensor, an electroencephalogram (EEG) sensor, an electrocardiogram (ECG) sensor, an Infrared (IR) sensor, an iris sensor, and/or a fingerprint sensor. The sensor module 240 may further include a control circuit for controlling one or more sensors included therein. In some embodiments of the present disclosure, the electronic apparatus 201 may further include a processor configured to control the sensor module 240 as a part of or separately from the processor 210, and may control the sensor module 240 while the processor 210 is in a sleep state.

The input device 250 may include various input circuitry, such as, for example, and without limitation, a touch panel 252, a (digital) pen sensor 254, a key 256, or an ultrasonic input device 258. The touch panel 252 may use at least one of, for example, a capacitive type, a resistive type, an infrared type, and an ultrasonic type. Also, the touch panel 252 may further include a control circuit. The touch panel 252 may further include a tactile layer and provide a tactile reaction to the user.

The (digital) pen sensor 254 may include, for example, a recognition sheet which is a part of the touch panel or is separated from the touch panel. The key 256 may include, for example, a physical button, an optical key or a keypad. The ultrasonic input device 258 may detect ultrasonic wavers generated by an input tool through a microphone (for example, a microphone 288) and identify data corresponding to the detected ultrasonic waves.

The display 260 (for example, the display 160) may include a panel 262, a hologram device 264 or a projector 266. The panel 262 may include a configuration that is identical or similar to the display 160 illustrated in FIG. 1. The panel 262 may be implemented to be, for example, flexible, transparent, or wearable. The panel 262 and the touch panel 252 may be implemented as one module. The hologram 264 may show a three dimensional image in the air by using an interference of light. The projector 266 may display an image by projecting light onto a screen. The screen may be located, for example, inside or outside the electronic apparatus 201. According to an embodiment, the display 260 may further include a control circuit for controlling the panel 262, the hologram device 264, or the projector 266.

The interface 270 may include various interface circuitry, such as, for example, and without limitation, a High-Definition Multimedia Interface (HDMI) 272, a Universal Serial Bus (USB) 274, an optical interface 276, or a D-subminiature (D-sub) 278. The interface 270 may be included in, for example, the communication interface 170 illustrated in FIG. 1. Additionally or alternatively, the interface 270 may include, for example, a Mobile High-definition Link (MHL) interface, a Secure Digital (SD) card/Multi-Media Card (MMC) interface, or an Infrared Data Association (IrDA) standard interface.

The audio module 280 may bilaterally convert, for example, a sound and an electrical signal. At least some elements of the audio module 280 may be included in, for example, the input/output interface 145 illustrated in FIG. 1. The audio module 280 may process sound information which is input or output through, for example, a speaker 282, a receiver 284, earphones 286, the microphone 288 or the like.

The camera module 291 is a device which may photograph a still image and a dynamic image. According to an embodiment, the camera module 291 may include one or more image sensors (for example, a front sensor or a back sensor), a lens, an Image Signal Processor (ISP) or a flash (for example, LED or xenon lamp).

The power management module 295 may manage, for example, power of the electronic device 201. According to an embodiment, the power management module 295 may include a Power Management Integrated Circuit (PMIC), a charger Integrated Circuit (IC), or a battery or fuel gauge. The PMIC may use a wired and/or wireless charging method. Examples of the wireless charging method may include, for example, a magnetic resonance method, a magnetic induction method, an electromagnetic method, and the like. Additional circuits (e.g., a coil loop, a resonance circuit, a rectifier, etc.) for wireless charging may be further included. The battery gauge may measure, for example, a residual quantity of the battery 296, and a voltage, a current, or a temperature during the charging. The battery 296 may include, for example, a rechargeable battery or a solar battery.

The indicator 297 may display a particular state (e.g., a booting state, a message state, a charging state, or the like) of the electronic apparatus 201 or a part (e.g., the processor 210). The motor 298 may convert an electrical signal into mechanical vibration, and may generate vibration, a haptic effect, or the like. Although not illustrated, the electronic apparatus 201 may include a processing unit (e.g., a GPU) for supporting a mobile television (TV). The processing unit for supporting mobile TV may, for example, process media data according to a certain standard such as Digital Multimedia Broadcasting (DMB), Digital Video Broadcasting (DVB), or mediaFLO™.

Each of the above-described component elements of hardware according to the present disclosure may be configured with one or more components, and the names of the corresponding component elements may vary based on the type of electronic device. The electronic device according to various embodiments of the present disclosure may include at least one of the aforementioned elements. Some elements may be omitted or other additional elements may be further included in the electronic device. Also, some of the hardware components according to various embodiments may be combined into one entity, which may perform functions identical to those of the relevant components before the combination.

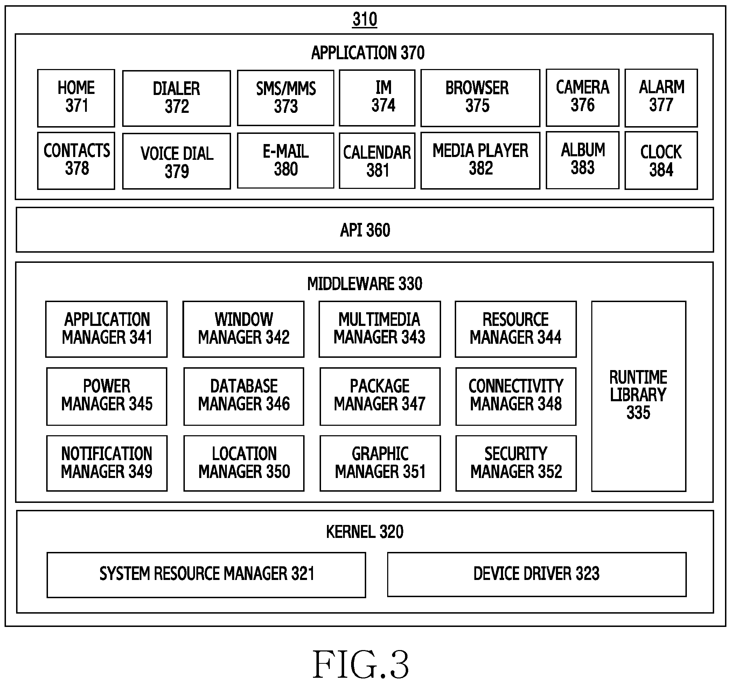

FIG. 3 is a block diagram illustrating an example program module according to various example embodiments of the present disclosure.

According to an embodiment, the program module 310 (for example, the program 140) may include an Operating System (OS) for controlling resources related to the electronic device (for example, the electronic device 101) and/or various applications (for example, the application programs 147) executed in the operating system. The operating system may be, for example, Android, iOS, Windows, Symbian, Tizen, Bada, or the like.

The program module 310 may include a kernel 320, middleware 330, an API 360, and/or an application 370. At least some of the program module 310 may be preloaded on the electronic apparatus, or may be downloaded from an external electronic apparatus (e.g., the electronic apparatus 102 or 104, or the server 106).

The kernel 320 (e.g., the kernel 141) may include, for example, a system resource manager 321 and/or a device driver 323. The system resource manager 321 may perform the control, allocation, retrieval, or the like of system resources. According to an embodiment of the present disclosure, the system resource manager 321 may include a process manager, a memory manager, a file system manager, or the like. The device driver 323 may include, for example, a display driver, a camera driver, a Bluetooth driver, a shared memory driver, a USB driver, a keypad driver, a Wi-Fi driver, an audio driver, or an Inter-Process Communication (IPC) driver.

The middleware 330 may provide a function required by the applications 370 in common or provide various functions to the applications 370 through the API 360 so that the applications 370 can efficiently use limited system resources within the electronic device. According to an embodiment, the middleware 330 (for example, the middleware 143) may include, for example, at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include a library module that a compiler uses in order to add a new function through a programming language while the applications 370 are being executed. The runtime library 335 may perform input/output management, memory management, the functionality for an arithmetic function, or the like.

The application manager 341 may manage, for example, the life cycle of at least one of the applications 370. The window manager 342 may manage Graphical User Interface (GUI) resources used for the screen. The multimedia manager 343 may determine a format required to reproduce various media files, and may encode or decode a media file by using a coder/decoder (codec) appropriate for the relevant format. The resource manager 344 may manage resources, such as a source code, a memory, a storage space, and the like of at least one of the applications 370.

The power manager 345 may operate together with a Basic Input/Output System (BIOS) to manage a battery or power and may provide power information required for the operation of the electronic device. The database manager 346 may generate, search for, and/or change a database to be used by at least one of the applications 370. The package manager 347 may manage the installation or update of an application distributed in the form of a package file.

The connectivity manager 348 may manage a wireless connection such as, for example, Wi-Fi or Bluetooth. The notification manager 349 may display or notify of an event, such as an arrival message, an appointment, a proximity notification, and the like, in such a manner as not to disturb the user. The location manager 350 may manage location information of the electronic apparatus. The graphic manager 351 may manage a graphic effect, which is to be provided to the user, or a user interface related to the graphic effect. The security manager 352 may provide various security functions required for system security, user authentication, and the like. According to an embodiment of the present disclosure, when the electronic apparatus (e.g., the electronic apparatus 101) has a telephone call function, the middleware 330 may further include a telephony manager for managing a voice call function or a video call function of the electronic apparatus.

The middleware 330 may include a middleware module that forms a combination of various functions of the above-described elements. The middleware 330 may provide a module specialized for each type of OS in order to provide a differentiated function. Also, the middleware 330 may dynamically delete some of the existing elements, or may add new elements.

The API 360 (e.g., the API 145) is, for example, a set of API programming functions, and may be provided with a different configuration according to an OS. For example, in the case of Android or iOS, one API set may be provided for each platform. In the case of Tizen, two or more API sets may be provided for each platform.

The applications 370 (for example, the application program 147) may include, for example, one or more applications which can provide functions such as home 371, dialer 372, SMS/MMS 373, Instant Message (IM) 374, browser 375, camera 376, alarm 377, contacts 378, voice dialer 379, email 380, calendar 381, media player 382, album 383, clock 384, health care (for example, measure exercise quantity or blood sugar), or environment information (for example, atmospheric pressure, humidity, or temperature information).

According to an embodiment of the present disclosure, the applications 370 may include an application (hereinafter, referred to as an "information exchange application" for convenience of description) supporting information exchange between the electronic apparatus (e.g., the electronic apparatus 101) and an external electronic apparatus (e.g., the electronic apparatus 102 or 104). The application associated with information exchange may include, for example, a notification relay application for forwarding specific information to an external electronic device, or a device management application for managing an external electronic device.

For example, the notification relay application may include a function of delivering, to the external electronic apparatus (e.g., the electronic apparatus 102 or 104), notification information generated by other applications (e.g., an SMS/MMS application, an email application, a health care application, an environmental information application, etc.) of the electronic apparatus 101. Further, the notification relay application may receive notification information from, for example, an external electronic device and provide the received notification information to a user.

The device management application may manage (for example, install, delete, or update), for example, a function for at least a part of the external electronic device (for example, the electronic device 102 or 104) communicating with the electronic device (for example, turning on/off the external electronic device itself (or some elements thereof) or adjusting brightness (or resolution) of a display), applications executed in the external electronic device, or services provided from the external electronic device (for example, a telephone call service or a message service).

According to an embodiment, the applications 370 may include applications (for example, a health care application of a mobile medical appliance or the like) designated according to attributes of the external electronic device 102 or 104. According to an embodiment of the present disclosure, the application 370 may include an application received from the external electronic apparatus (e.g., the server 106, or the electronic apparatus 102 or 104). According to an embodiment of the present disclosure, the application 370 may include a preloaded application or a third party application which can be downloaded from the server. Names of the elements of the program module 310, according to the above-described embodiments of the present disclosure, may change depending on the type of OS.

According to various embodiments of the present disclosure, at least some of the program module 310 may be implemented in software, firmware, hardware, or a combination of two or more thereof. At least some of the program module 310 may be implemented (e.g., executed) by, for example, the processor (e.g., the processor 210). At least some of the program module 310 may include, for example, a module, a program, a routine, a set of instructions, and/or a process for performing one or more functions.

The term "module" as used herein may, for example, refer a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module' may be a minimum unit for performing one or more functions or a part thereof. The "module" may be mechanically or electronically implemented. For example, the "module" according to the present disclosure may include, for example, and without limitation, at least one of a dedicated processor, a CPU, an Application-Specific Integrated Circuit (ASIC) chip, a Field-Programmable Gate Arrays (FPGA), and a programmable-logic device for performing operations which has been known or are to be developed hereinafter.

According to various embodiments, at least some of the devices (for example, modules or functions thereof) or the method (for example, operations) according to the present disclosure may be implemented by a command stored in a computer-readable storage medium in a programming module form. The instruction, when executed by a processor (e.g., the processor 120), may cause the one or more processors to execute the function corresponding to the instruction. The computer-readable storage medium may be, for example, the memory 130.

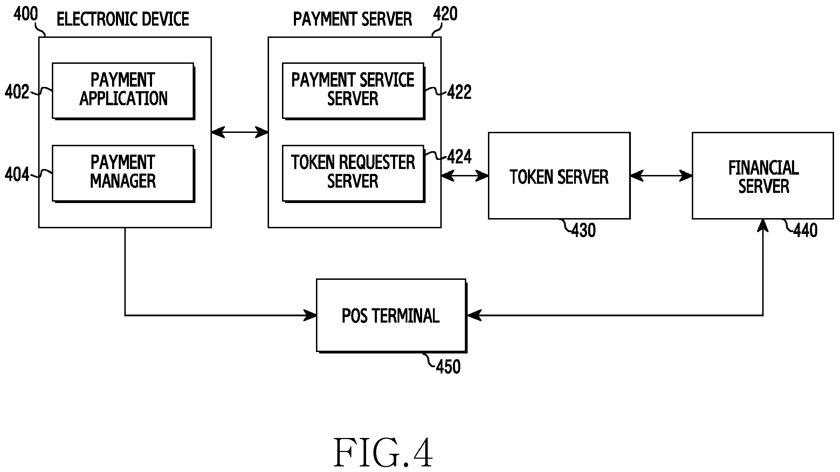

FIG. 4 is a block diagram illustrating an example structure of a payment system according to various example embodiments of the present disclosure.

Referring to FIG. 4, a payment system may include an electronic device 400 (e.g., the electronic device 101), a payment server 420, a token server 430, a financial server (e.g., a credit card and/or a bank network) 440, and/or a Point Of Sale (POS) terminal 450. An external device may include the payment server 420 and/or the token server (or token service provider) 430. The electronic device 400 may include, for example, a payment application (or a wallet application) 402 and/or a payment manager 404. The payment server 420 may include, for example, a payment service server 422 and/or a token requester server (or a token requester) 424.

According to various example embodiments, the payment application 402 of the electronic device 400 may include a payment application (e.g., a Samsung Pay™ Application) of a manufacturer of the electronic device. The payment application 402 may provide, for example, a user interface (e.g., a User Interface (UI) or a User Experience (UX)) related to a payment. The user interface related to the payment may include a wallet user interface (e.g., a wallet UI/UX). For example, the payment application 402 may provide a user interface related to a card registration, a payment, or a transaction. The payment application 402 may provide, for example, an interface related to the card registration via a character reader (e.g., Optical Character Reader/Recognition (OCR)) or an external input (e.g., a user input). The payment application 402 may provide, for example, an interface related to user authorization through IDentification and Verification (ID&V).

According to various example embodiments of the present disclosure, the payment application 402 of the electronic device 400 may provide an interface capable of supporting an offline payment based on a One-Time Password (OTP) and/or a pre-register token procedure. According to various example embodiments of the present disclosure, the payment application 402 may provide an interface through which a user of the first electronic device can register post-money-share information to a user of the second electronic device, and the user of the second electronic device can perform a payment on the basis of the registered post-money-share information. According to various example embodiments of the present disclosure, the payment application 402 may provide an interface through which a payment can be performed by selecting a favorite card for the payment at the time of payment.

According to various example embodiments, the payment application 402 may perform a payment transaction. For example, the payment application 402 may provide a payment function to the user by executing Simple Pay, Quick Pay, and designated applications. The user may perform the payment function by using the payment application 402, and may receive information related to the payment function. According to various example embodiments of the present disclosure, the payment application 402 of the electronic device 400 may perform an offline payment transaction on the basis of a token stored in an offline state.

According to various example embodiments, the payment manager 404 may include information related to a card company. For example, the payment manager 404 may include a Software Development Kit (SDK) of the card company.

According to various example embodiments, the external device may include the payment server 420 and the token server 430.

According to various example embodiments, the payment server 420 may include a management server for an electronic payment or a mobile payment. The payment server 420 may receive, for example, information related to the payment from the electronic device 400 to transmit it to the outside, or may be processed by the payment server 420.

According to various example embodiments, the payment server 420 may transmit/receive information between the electronic device 400 and the token server 430 by using the payment service server 422 and/or the token requester server 424. The payment service server 422 may include, for example, the payment server (e.g., a Samsung payment server) 420. The payment service server 422 may manage, for example, a service account (e.g., a Samsung account) or card information associated with a user account. Further, the payment service server 422 may include, for example, an Application Program Interface (API) server related to the payment application 402. Further, the payment service server 422 may provide, for example, an account management module (e.g., account integration or Samsung account integration).

According to various example embodiments, the token requester server 424 may provide an interface for processing information related to the payment. For example, the token requester server 424 may issue, delete, or activate the information (e.g., a token) related to the payment. Alternatively, it may be operatively coupled to the payment manager 404 to control the information required for the payment.

According to various example embodiments, the payment application 402 included in the electronic device 400 may be operatively coupled to the payment service server 422 included in the payment server 420. For example, the payment application 402 may transmit/receive the information related to the payment to the payment server 420. According to one example embodiment, the payment manager 404 included in the electronic device 400 may be operatively coupled to the token requester server 424 included in the payment server 420. For example, the payment manager 404 may transmit to or receive from the token requester server 424 the information related to the payment.

According to various example embodiments of the present disclosure, the payment server 420 may include an account IDentification (ID) of the electronic device 400 and a local OTP module corresponding to the account ID. The payment server 420 may assign different account IDs to a plurality of electronic devices, and may include local OTP modules corresponding to the respective IDs. The payment server 420 may generate the same OTP by synchronizing the OTP module of the electronic device 400 corresponding to a specific account ID with the local OTP module of the payment server 420.

According to various example embodiments of the present disclosure, the payment server 420 may register a pre-register payment function. Upon receiving pre-register payment information (e.g., a payment amount, a validation period, etc.) for an offline payment, the payment server 420 may deliver it to the token server 430. Upon receiving a token for a pre-register payment in the token server 430, the payment server 420 may deliver it to the electronic device 400.

The electronic device 400 may perform the payment function in an offline or online manner. According to various example embodiments of the present disclosure, the electronic device 400 may perform the payment operation by generating cryptogram information at the time of payment or by using a pre-register token stored therein. In one example embodiment, the electronic device 400 may generate the cryptogram information on the basis of an OTP generated in an OTP module at the time of payment and an account ID stored therein, and may deliver it to the POS terminal 450. In one example embodiment, the electronic device 400 may select a valid token among pre-register tokens stored therein, and may deliver it to the POS terminal 450. The POS terminal 450 may deliver to the financial server 440 at least one of the token, the cryptogram information, and the payment information (e.g., a payment location, a payment date and time, a payment amount, etc.).

The financial server 440 may include a payment network which is a server of a card company. The payment network may transmit to the token server 430 at least one of the token, the cryptogram information, and the payment information. The payment network may include a network related to the card company, and may be, for example, VISA™, MasterCard™, or Amex™. According to one example embodiment, the payment network may include or operate the token server 430.

The token server 430 may receive at least one of the token, the cryptogram information, and the payment information. The token server 430 may confirm information on the received token. For example, the token server 430 may use the token to confirm card information (e.g., a card number (or a PAN), an expiry date, etc.) corresponding to the token. For example, the token server 430 may use information (e.g., data) included in the token to confirm a Primary Account Number (PAN) corresponding to the financial server 440. The token server 430 may confirm the PAN corresponding to the financial server 440, so that a payment authorization is achieved in the financial server 440 by using the PAN. According to various example embodiments, the token server 430 may use the received cryptogram information to confirm the PAN. According to various example embodiments, the token server 430 may deliver the PAN to the financial server 440 (e.g., a payment network).

The financial server 440 may receive the PAN and/or the payment information. The financial server 440 may use the PAN and/or the payment information to determine whether the payment is approved. For example, the financial server 440 may use the PAN and/or the payment information to confirm whether it is identical to information (e.g., a valid PAN) included in the financial server 440. The financial server 440 may identify whether there is a PAN identical to a PAN received from a database in which the PAN is stored, and may identify payment limit information (e.g., a payment limit, an overseas approval, etc.) related to the identical PAN. The financial server 440 may determine whether it is approved by determining whether the payment information satisfies the identified payment limit information. If the PAN and/or the payment information are identical to information included in the financial server 440, the financial server 440 may approve the payment. Alternatively, if the PAN and/or the payment information are not identical to the information included in the financial server 440 (e.g., an invalid PAN), the financial server 440 may reject the payment. The rejecting of the payment may refer to a situation in which the payment is not approved (e.g., a disapproval or a rejection).

The financial server 440 may deliver an approval result (e.g., an approval or a rejection) to the token server 430 and/or the POS terminal 450.

The token server 430 may deliver the payment information to the payment server 420. The payment server 420 may deliver the payment information to the electronic device 400. For example, the payment server 420 may use the payment information as a designated command (e.g., a push message) to deliver the payment information to the electronic device 400. The payment information may include a payment location, a payment date and time, a payment amount, an accumulated payment amount, or the like.

Although the token server 430, the financial server 440, and the payment server 420 are illustrated and described as separate entities in FIG. 4, according to an example embodiment, the token server 430, the financial server 440, and the payment server 420 may also be configured as one entity. In addition, the token server 430 and the financial server 440 may also be configured as one entity. In addition, the payment server 420 and the token sever 430 may also be configured as one entity. In addition, the financial server 440 and the payment network (e.g., a server of the card company) may be configured as independent servers.

According to various example embodiments, the electronic device 400 may display the payment information to a display. For example, the electronic device 400 may display the payment information through a payment application included in the electronic device 400, or may display it through an interface associated with a payment function. An interface associated with the payment function may include a notification bar. According to various example embodiments, the payment server 420 and/or the token server 430 may be located in the same or similar region or may be located in regions separated from each other. For example, the payment server 420 may be included in a first server, and the token server 430 may be included in a second server. In addition, for example, the payment server 420 and/or the token server 430 may be implemented distinctively as one server (e.g., the first server or the second server).

According to various example embodiments of the present disclosure, the payment server 420 may provide the electronic device 400 with information for an offline payment of the electronic device 400. According to one example embodiment, the electronic device 400 and the payment server 420 may include an OTP module. When the electronic device 400 performs a pre-register procedure for the offline payment, the payment server 420 may transmit its OTP module ID (e.g., an OTP chip ID). The payment server 420 which receives the OTP chip ID of the electronic device may transmit to the electronic device an account ID (e.g., a unique ID "A") of the electronic device corresponding to the received OTP chip ID. The electronic device may perform a payment operation by generating cryptogram information for the offline payment on the basis of an OTP value generated in the OTP module at the time of payment and an account ID received via the payment server 420.

According to one example embodiment, when the pre-register procedure is performed for the offline payment, the electronic device 400 may transmit pre-register payment information (e.g., information including a maximum payment amount and/or a validation period) to the payment server 420. Upon receiving the pre-register payment information, the payment server 420 may request the token server 430 to generate a token based on the pre-register payment information, and the token server 430 may generate the token on the basis of the pre-register payment information. For example, the token may be obtained by replacing a credit card number with a unique encryption number (a token). With self-encryption and security setup, a shop, a transaction type, and a route may be limited with respect to a specific device. The token may be information (e.g., a proxy card number) which replaces an actual card number, and may be used in a specific mobile device. For example, the token may be information capable of performing a digital payment function in a mobile device (e.g., a smart phone, etc.). The token generated in the token server 430 may be delivered to the electronic device 400 via the payment server 420. The electronic device 400 may store the received token, and may perform the offline payment operation by using a valid token among stored tokens at the time of payment.

According to one example embodiment, the first electronic device may request for a pre-registration of post-money-share information with respect to the second electronic device. When performing a post-money-share registration procedure, the first electronic device may transmit to the payment server 420 payment information (e.g., an information including a maximum payment amount and/or a validation period) to be shared. Upon receiving the post-money-share information, the payment server 420 may transmit the post-money-share information to the token server 430. After the financial server 400 confirms a credit of the first electronic device, the toke server 430 may generate the token on the basis of the post-money-share information, and may deliver the generated token to the payment server 420. The payment server 420 may deliver the token generated on the basis of the post-money-share information to the second electronic device, and the second electronic device may store the received token. The second electronic device may perform the offline payment operation by using a valid token among stored tokens at the time of payment, and the payment server 420 may deliver to the first electronic device a result of the payment performed by the second electronic device.

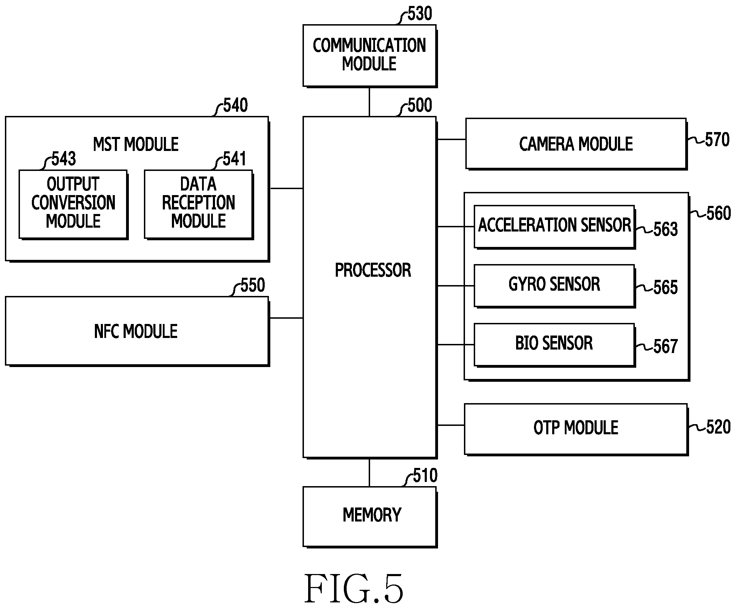

FIG. 5 is a diagram illustrating an example structure of an electronic device (e.g., the electronic device 101 of FIG. 1 or the electronic device 400 of FIG. 4) according to various example embodiments of the present disclosure.

Referring to FIG. 5, the electronic device may include a processor (e.g., including processing circuitry) 500, a memory 510, an OTP module (e.g., including circuitry for generating a password) 520, a communication module (e.g., including communication circuitry) 530, an MST module 540, an NFC module 550, a sensor module 560, and/or a camera module 570.

The memory 510 may be the memory 130 of FIG. 1. The memory 510 may store a payment application for performing a payment function and a program for executing a payment manager according to various example embodiments of the present disclosure. For example, the memory 510 may store instructions for allowing the processor 500 to execute an offline payment operation when the payment function is executed according to various example embodiments of the present disclosure. The processor 500 may be the processor 120 of FIG. 1. The processor 500 may use the instructions stored in the memory to process the execution of the offline payment function according to various example embodiments of the present disclosure.

The OTP module 520 may include various circuitry including hardware, software and/or a combination thereof, and generate a one-time password of the electronic device. According to one example embodiment, the OTP generated in the OTP module 520 may also be used as a password for registering an offline payment. A main board of the electronic device may include a separated chip capable of generating the OTP. The electronic device and the OTP module 520 may have respective own IDs, and may generate two different unique passwords at corresponding specific time points in respective configurations. The OTP generated in the OTP module 520 may operate as an identity card of a user at the time of payment. The OTP module 520 may operate by being distinguished from another part of the electronic device, and a third-party application cannot access the OTP module 520. The OTP may avoid a payment fraud, and may protect a user identity from other parts of OS systems.

The communication module 530 may be the communication interface 170 of FIG. 1. The communication module 530 may include various circuitry to transmit information for registering an offline payment to a PSN. The communication module 530 may download information (e.g., a token, unique identification information, etc.) for the offline payment from the PSN.

The camera module 570 may capture a card required in the payment to obtain card information. The camera module 570 may use an Optical Character Reader (OCR) function to recognize the card information (e.g., a card company, a card number, a card expiration date, a card owner, etc.) indicated in the card. Alternatively, the user may input required card information to the electronic device by using an input device (e.g., a touch panel, a pen sensor, a key, an ultrasonic input device, a microphone input device, etc.) included in the electronic device.

The sensor module 560 may include an acceleration sensor 563, a gyro sensor 565, and a bio sensor 567. The acceleration sensor 563 or the gyro sensor 565 may obtain a location state of the electronic device at the time of payment. The obtained location information of the electronic device may be delivered to the processor 500. The processor 500 may adjust strength of a magnetic field (or strength of electric current) transmitted to a POS terminal from any one of the MST module 540 and the NFC module 550 on the basis of the obtained location state of the electronic device, or if a plurality of coil antennas are present, may select a coil antenna to be used.

The bio sensor 567 may obtain bio information. The obtained bio information may be delivered to the processor 500. The processor 500 may compare the obtained bio information with pre-stored user's bio information to authorize the user.

At least any one of the MST module 540 and the NFC module 550 may transmit payment information to the POS terminal. According to one example embodiment, the MST module 540 may include a data reception module 543 and an output conversion module 545. The data reception module 543 may receive a pulse signal having a logical low/high form and including payment information transmitted by the processor 500 or a security module (not shown). The output conversion module 545 may include a circuit for converting data recognized in the data reception module 543 into a required form in order to deliver the recognized data to the POS terminal. The circuit may include an H-Bridge for controlling a direction of voltage supplied to both ends of the MST module 540. The H-Bridge may include a structure of circuits connected in an H-shape by using four switch structures.

The processor 500 may include various processing circuitry and transmit the payment information to the POS terminal by using at least one of the MST module 540 and the NFC module 550. In order to increase a recognition rate, the processor 500 may transmit the payment information to the POS terminal by simultaneously using the MST module 540 and the NFC module 550. Alternatively, the processor 500 may transmit the information by using the MST module 540, and if the payment fails, may transmit the information by using the NFC module 550. A method of recognizing a case where the payment fails may include a case where the processor 500 receives a notification from the POS terminal or a 3^{rd} party (e.g., a financial institution) or a case where a designated time elapses. Various example embodiments are not limited to the aforementioned order, and thus an opposite order may also be possible.

According to various example embodiments of the present disclosure, the electronic device (e.g., the electronic device 400 of FIG. 4 or the electronic device of FIG. 5) may perform the offline payment function. For the offline payment, the electronic device may perform a pre-register procedure by using an OTP chip ID or pre-register payment information.

According to one example embodiment, the electronic device may transmit an ID of the OTP module 520 (e.g., an OTP chip ID) to a payment server (e.g., the payment server 420 of FIG. 4) via the communication module 530. The OTP chip ID may be transmitted. Upon transmitting the OTP chip ID, the electronic device may receive and store an account ID (e.g., a unique account ID "A") transmitted from the payment server 420 via the communication module 530. The electronic device may generate cryptogram information based on the account ID and OTP generated in the OTP module 520, and may deliver the generated cryptogram information to a POS terminal (e.g., the POS terminal 450 of FIG. 4). In this case, the electronic device may transmit the cryptogram information to the POS terminal in an offline state. The cryptogram information delivered to the POS terminal may be delivered to the payment server via a financial server (e.g., the financial server 440 of FIG. 4) and a token server (e.g., the token server 430 of FIG. 4). Upon receiving the cryptogram information, the payment server may perform a payment authorization by comparing the OTP generated in a local OTP module and corresponding to the account ID with the OTP included in the cryptogram information.

According to one example embodiment, the electronic device may generate pre-register payment information including a payment amount, a validation period, or the like, and may deliver the generated pre-register payment information to the payment server (e.g., the payment server 420 of FIG. 4) via the communication module 530. The payment server may deliver the received pre-register payment information to the token server (e.g., the token server 430 of FIG. 4) to generate a pre-register token. The payment server may deliver to the electronic device the pre-register toke delivered from the token server. The electronic device may store the received pre-register token. The electronic device may select the pre-register token at the time of payment, and may deliver the selected pre-register token to the POS terminal 450. In this case, the electronic device may deliver the pre-register token to the POS terminal in the offline state.

The electronic device may include the OTP module 520. The payment server (e.g., the payment server 420 of FIG. 4) may include an account ID of the electronic device and a local OTP module corresponding to the account ID. According to various example embodiments of the present disclosure, the electronic device may perform an offline payment function on the basis of the pre-register token or the cryptogram information including the password ID and the OTP. In this case, OTP information may be included in the cryptogram information and/or the pre-register token. When the offline payment operation is performed in the electronic device, the payment may be performed by using the following two methods. First, the payment server may authorize the OTP information, and may notify payment card information to the financial server on the basis of an authorization result to perform a payment operation. Secondly, if the payment card information is included in the token, the payment server may perform an OTP authorization operation as an additional authorization.

According to one example embodiment, the electronic device may share determined money of a first user with a second user. The user of the first electronic device may transmit post-payment information to the payment server (e.g., the payment server 420 of FIG. 4) via the communication module to configure a postpaid-money-share function. The post-payment information may include second user information, an amount of shared money, a validation period, or the like. Upon receiving the post-payment information, the payment server may deliver the post-payment information to the token server (e.g., the token server 430 of FIG. 4). The token server may request the financial server (e.g., the financial server 440 of FIG. 4) to authorize a credit of the first electronic device, and if the authorization is successful, may generate a token and deliver it to the payment server. The payment server may transmit a token related to the post-payment information to be shared by the first electronic device to the electronic device of the second user (e.g., the second electronic device) capable of sharing the post-payment information. Thereafter, if the user of the second electronic device performs the payment operation through the POS, the token server may verify a token used in the second electronic device, and if the token is successfully verified, the financial server may process the payment requested by the second electronic device. According to one example embodiment, the electronic device may receive information regarding a most favorite card for the payment in a process of performing the payment operation. The user of the electronic device may register information on the payment server such as a payment priority, a minimum payment amount, a preference payment, or the like with respect to a card (e.g., a credit card, a debit card, a gift card, or the like) registered in the electronic device. The payment server may propose the user to use a best card on the basis of a pre-registered payment card preference and/or a payment model, when the electronic device performs a payment operation based on goods or services.

According to various example embodiments of the present disclosure, an electronic device may include a communication module, a short-range communication module, a One Time Password (OTP) module for generating an OTP, and a processor operatively coupled to the communication module and the short-range communication module. The processor may be configured for requesting for an offline payment registration by transmitting an IDentification (ID) of the OTP module via the communication module, receiving an account ID based on the offline payment registration, and storing the account ID, and for generating the OTP via the OTP module at the time of an offline payment, generating a token on the basis of the generated OTP and the account ID, and transmitting the generated token to a Point On Sale (POS) terminal via the short-range communication module to perform a payment.

The OTP module may generate the OTP in a time synchronization manner.

The OTP module may generate the OTP on the basis of a current time at the time of the offline payment. The processor may generate a payment token by combining the generated OTP and the stored account ID.

The electronic device may further include an authorization module for authorizing the user. The processor may authorize the user on the basis of a Personal Identification Number (PIN) or a fingerprint which is input in the authorization module at the time of the offline payment.

The short-range communication module may include at least one of a Near Field Communication (NFC) module and a Magnetic Secure Transmission (MST) module. The processor may transmit the token to the POS terminal upon sensing a contact or approach of the POS terminal via the short-range communication module.

The processor may be configured for generating payment information, requesting a pre-registration of the payment information generated via the communication module, and receiving and storing a token of the pre-registered payment information via the communication module, and for selecting the token at the time of payment and transmitting the selected token to the POS terminal via the short-range communication module to perform the payment.

The payment information may include information on a maximum payment amount and a validation period.

The electronic device may include a first electronic device for providing post-payment information and a second electronic device for performing a payment operation by using the provided post-payment information. A processor of the first electronic device may be configured for generating the post-payment information to be shared with the second electronic device, and transmitting the generated post-payment information via the communication module to share the post-payment information with the second electronic device, and for displaying a result of the payment performed by the second electronic device by the use of the shared post-payment information by receiving the result via the communication module.

A processor of the second electronic device may be configured for sharing the post-payment information provided from the first electronic device, requesting a token for an offline payment via the communication module, and storing the token received via the communication module, and for selecting the token at the time of payment and transmitting the selected token to the POS terminal via the short-range communication module to perform the payment.

The post-payment information may include a maximum payment amount and a validation period.

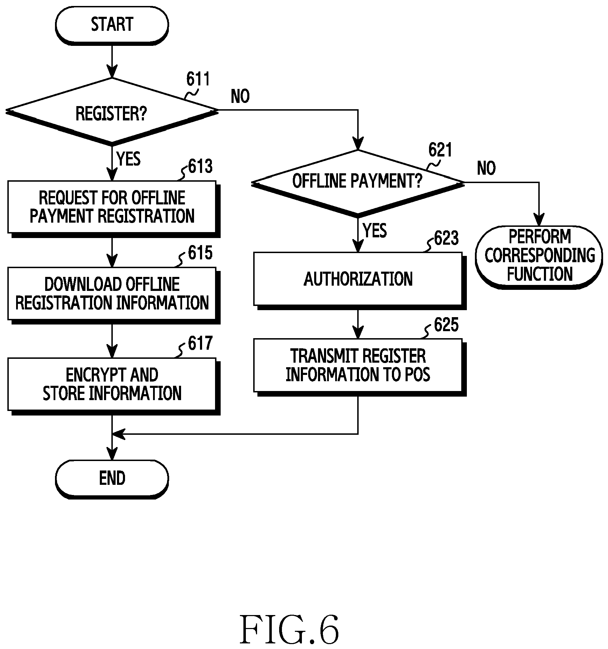

FIG. 6 is a flowchart illustrating an example procedure of performing an offline payment operation by an electronic device according to various example embodiments of the present disclosure.

Referring to FIG. 6, the electronic device (e.g., the processor 120 of FIG. 1 or the processor 500 of FIG. 5) may pay for goods and/or services in an offline state. For an offline payment, the electronic device may register information for the offline payment to a payment server (e.g., the payment server 420 of FIG. 4). When in a pre-register mode for the offline payment, the electronic device may recognize this in operation 611, and may transmit information for registering the offline payment in operation 613. In operation 613, the electronic device may transmit an OTP chip ID, or may transmit pre-register payment information (e.g., a maximum payment amount, a validation period, etc.) to the payment server (e.g., the payment server 420 of FIG. 4). After requesting the offline payment registration, the electronic device may download information for the offline payment from the payment server in operation 615, and may store the download information into a memory in operation 617.

In an example embodiment, the electronic device may transmit the OTP chip ID to the payment server in operation 613. The payment server may have local OTP modules, and may have an account ID mapped to a local OTP synchronized with an OTP module of the electronic device. The payment server may transmit the account ID corresponding to the OTP chip ID to the electronic device. The electronic device may download the account ID in operation 615, and may encrypt and store the downloaded account ID in operation 617.

In an example embodiment, the electronic device may generate the pre-register payment information including the maximum amount and the validation period and may transmit it to the payment server in operation 613. The payment server may transmit the received pre-register payment information to the token server (e.g., the token server 430 of FIG. 4). The token server may generate the token on the basis of the pre-register payment information, and may deliver the generated token to the payment server. The payment server may transmit the token to the electronic device. The electronic device may receive the token in operation 615, and may encrypt and store the received token.

The electronic device may store the offline payment information. When the payment is performed, the electronic device may recognize this in operation 621, and may perform a user authorization procedure in operation 623. The user authorization may be performed by inputting a password of the electronic device or by inputting bio information such as a fingerprint or the like. If the user authorization is valid, the user may select information for the offline payment from the electronic device, and may transmit it to the POS terminal (e.g., the POS terminal 450 of FIG. 4).

In an example embodiment, the electronic device may generate cryptogram information on the basis of an OTP and an account ID stored at the time of the offline payment. At the time of the offline payment, in operation 625, the electronic device may generate the cryptogram information for the offline payment on the basis of the OTP generated in the OTP mode and the account ID stored in the memory. The electronic device may deliver the generated cryptogram information to the POS terminal.

In an example embodiment, the electronic device may select a valid token among pre-register tokens at the time of the offline payment. In operation 625, the electronic device may deliver the selected pre-register token to the POS terminal.

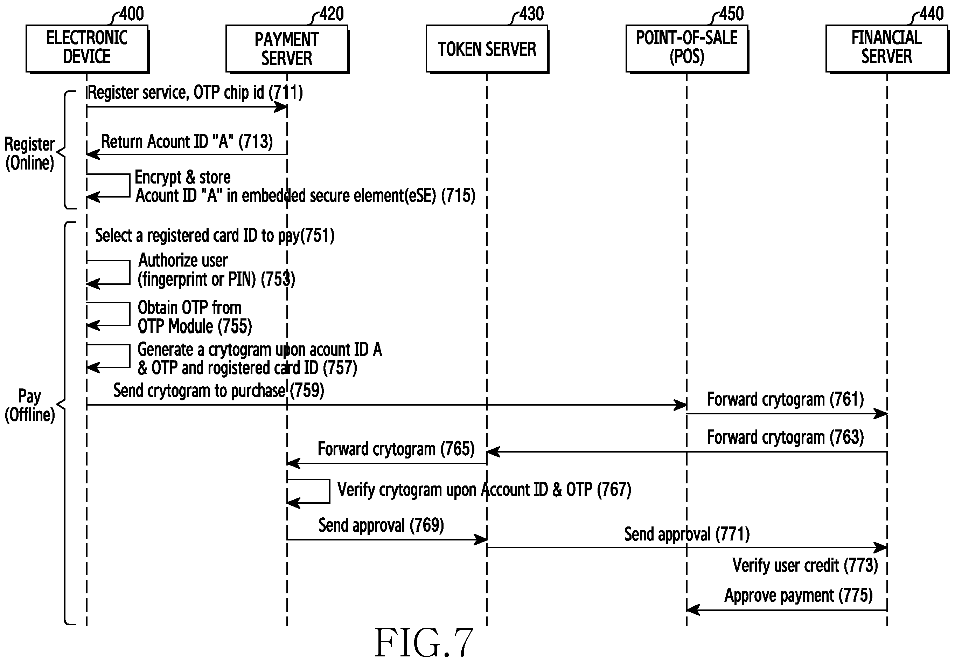

FIG. 7 is a flowchart illustrating an example offline payment operation of a payment system according to various example embodiments of the present disclosure.

Referring to FIG. 7, the payment system may include the electronic device (e.g., a user client) 400, the payment server 420, the token server 430, the POS 450, and the financial server 440.

The electronic device 400 may include a separated OTP chip (e.g., the OTP module 520 of FIG. 5) capable of generating an OTP. The payment server 420 may have a local OTP module and account IDs. For example, the payment server 420 may have account IDs respectively corresponding to a plurality of electronic devices, and each account ID may be mapped to a local OTP module capable of generating the same OTP by being synchronized with an OTP module of a corresponding electronic device. For example, the OTP module of the electronic device and the local OTP module of the payment server 420 may generate the same OTP at the same time by being time-synchronized. In operation 711, the electronic device 400 may perform a register service procedure for the offline payment, and may transmit an OTP chip ID of the OTP module to the payment server 420. In operation 713, the payment server 420 for receiving the OTP chip ID may transmit an account ID corresponding to the received OTP chip ID to the electronic device 420. In operation 715, the electronic device 420 may encrypt and store the account ID.

A One Time Password (OTP) may be a user authorization method which uses a one-time password randomly generated instead of a fixed password. The OTP is a system introduced to enhance security, and can overcome vulnerability which occurs when the same password is repeatedly used since the one-time password is generated whenever a login is made. According to various example embodiments of the present disclosure, the electronic device may include an OTP module.

The OTP module may generate a value by using a secret key allocated only to each user when the OTP is generated. The OTP chip ID (e.g., the secrete key) may be generated together when the OTP chip is initially made, and may be stored in the PSN When the OTP is generated, the OTP chip may generate a different OTP every time by allowing authorization information (e.g., a current time, the number of times of pressing, or the like) to be calculated simultaneously with the secrete key. When the OTP is generated in the OTP chip, the electronic device 400 and the payment server 420 do not have to directly perform wireless communication.

The OTP generated in the OTP module may generate a number according to a predetermined specific rule, and thus the PSN may also generate the OTP by using the same rule. A method of generating the OTP may include a time synchronization method, an event synchronization method, a method of combining a time and an event, or the like. In the time synchronization method, an input value may be a time which is automatically input. In the event synchronization method, an input value may be the number of times of generating the OTP which is automatically input. The event synchronization method may require synchronization of the number of times of generating the OTP between the OTP module of the electronic device and the local OTP module of the payment server 420. According to one example embodiment, the OTP chip of the present disclosure may use the time synchronization method.

In regards to a pay procedure, the electronic device 400 may select a credit card for an offline payment in operation 751. When the credit card is selected, the electronic device 400 may display information for a user authorization to a display. In operation 753, the electronic device 400 may display a window for inputting fingerprint or Personal Identification Number (PIN) information. When the user authorization is achieved, in operation 755, the electronic device 400 may call a private Application Program Interface (API) to obtain an OTP from the OTP module (e.g., the OTP module 520 of FIG. 5). The OTP module 520 may generate the OTP by using the time synchronization method. In operation 757, the electronic device 400 may generate cryptogram information based on the selected credit card information, the account ID stored in the memory, and the OTP generated in the OTP module 520. If a contact or approach is recognized with respect to the POS 450 after generating the cryptogram information for the offline payment, in operation 759, the electronic device 400 may transmit the cryptogram information to the POS 450 to pay for goods or services. The electronic device 400 may transmit the cryptogram information to the POS 450 via an NFC (e.g., the NFC module 550 of FIG. 5) and/or an MST (e.g., the MST module 540 of FIG. 5).

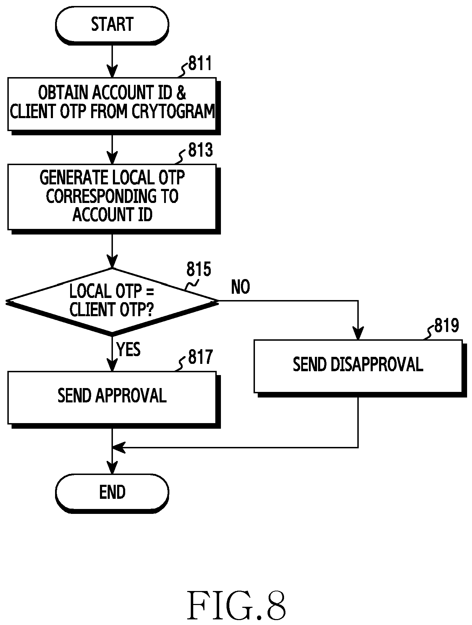

Upon receiving the cryptogram information from the electronic device 400, in operation 761, the POS 450 may transmit the cryptogram information and financial information to the financial server 440 (e.g., a credit card network). The payment information may include information such as a payment data and time, a payment amount, or the like. Upon receiving the cryptogram information and payment information from the POS 450, in operation 763, the financial server 440 may transmit the cryptogram information and the payment information to the token server 430. In operation 765, the token server 430 may transmit the cryptogram information to the payment server 420. In operation 767, the payment server 420 for receiving the cryptogram information may interpret the cryptogram information to extract the account ID and the OTP. The payment server 420 may obtain an OTP from a local OTP module to be mapped to the extracted account ID, and may perform verification by comparing and analyzing the obtained OTP and an OTP included in the cryptogram information (e.g., the OTP generated in the electronic device 400). The verification method of the payment server 420 may be performed using the method of FIG. 8. If the two OTP values are identical, in operation 769, the payment server 420 may transmit a payment approval to the token server 430. The payment server 420 may also transmit credit card information included in the received cryptogram information together. In operation 771, the token server 430 may transmit payment approval information including a PAN corresponding to the credit care information to the financial server 440. The financial server 440 may verify PAN payment information. If a verification result is an approval, in operation 775, the financial server 440 may approve a payment to the POS 450. Then, the POS 450 may perform a payment processing operation, and may issue a receipt or the like.

FIG. 8 is a flowchart illustrating an example procedure of verifying a token including a one-time password in a payment service network according to various example embodiments of the present disclosure. FIG. 8 may be a drawing for explaining the procedure of verifying the token in operation 763 of FIG. 7.

Referring to FIG. 8, upon receiving cryptogram information including an OTP, in operation 811, the payment server 420 may obtain an OTP of the electronic device 400 (e.g., a client OTP) and an account ID from the received cryptogram information. In operation 813, the payment server 420 may extract an OTP value generated in a local OTP module corresponding to the account ID. The OTP module of the electronic device 400 and the local OTP module of the payment server 420 may generate the same OTP at the same time. In operation 815, the payment server 420 may perform verification by comparing and verifying an OTP value included in the received cryptogram information and a local OTP value generated in the payment server 420. If the two OTP values are identical, in operation 817, the payment server 420 may send a payment approval signal to the token server 430. If the two OTP values are different, in operation 819, the payment server 420 may send a payment rejection signal to the token server 430.

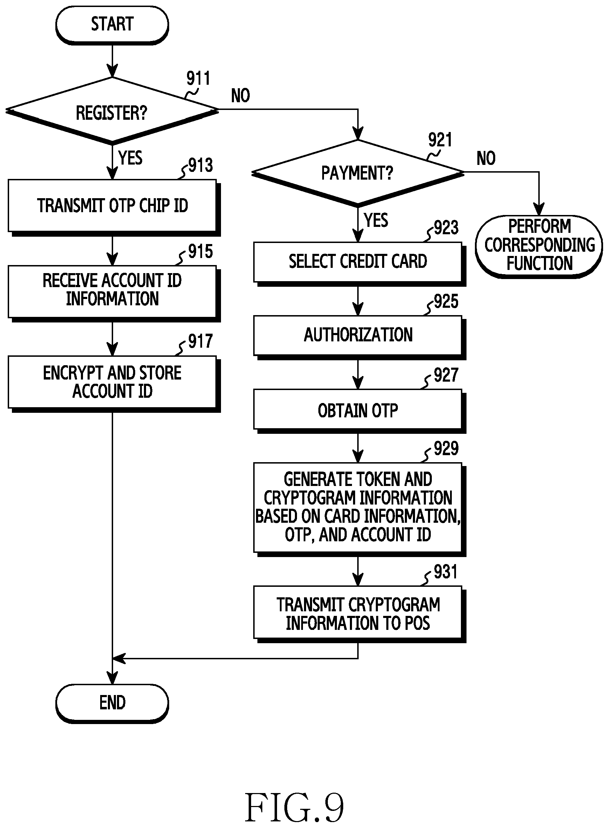

FIG. 9 is a flowchart illustrating an example offline payment operation of an electronic device according to various example embodiments of the present disclosure.

Referring to FIG. 9, the electronic device 400 may perform an OTP-based offline payment procedure. If an offline payment is registered, the electronic device 400 (e.g., the processor 120 of FIG. 1 or the processor 500 of FIG. 5) may recognize this in operation 911. In operation 913, the electronic device 400 may transmit an ID of an OTP chip included in the electronic device 400 (e.g., the OTP module 520 of FIG. 5) to a payment server (e.g., the payment server 420 of FIG. 4. Then, the payment server 420 may transmit to the electronic device 400 an account ID corresponding to the OTP chip ID of the electronic device 400. The account ID may be an account ID to be mapped to a local OTP module synchronized with the OTP chip of the electronic device 400. The electronic device 400 may receive the account ID transmitted from the payment server 420 in operation 915, and may encrypt and store the received account ID in operation 917.

A user may perform an offline payment operation at the time of payment. Upon recognizing the payment operation in operation 921, the electronic device 400 may determine a credit card selected by the user as a payment card in operation 923. After the payment card is determined, in operation 925, the electronic device may perform an authorization procedure by using a fingerprint, a password input, or the like. If the payment authorization is achieved, the electronic device 400 may obtain an OTP value of a current time from the OTP chip in operation 927, and may generate cryptogram information on the basis of selected payment card information, an OTP value, and a stored account ID in operation 929. If a wireless connection is established with a POS, the electronic device 400 may transmit the cryptogram information generated in the POS in operation 931. When the payment operation is performed, the electronic device may maintain an offline state with respect to the payment server 420.

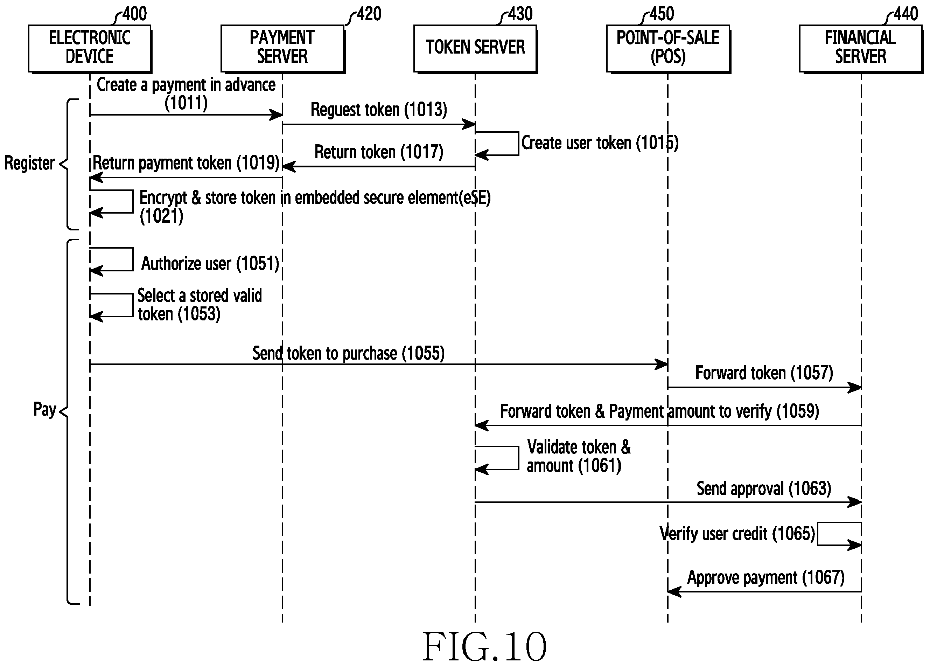

According to one example embodiment, the electronic device may perform an offline payment by using a pre-register token. FIG. 10 is a flowchart illustrating an example operation of performing an offline payment by pre-registering a token in a payment system according to various example embodiments of the present disclosure.

Referring to FIG. 10, the payment system may include the electronic device (e.g., user client) 400, the payment server 420, the token server 430, the POS 450, and the financial server 440.

The electronic device 400 may pre-register information for the offline payment. A user may pre-register payment information including a maximum amount and a validation period (hours, days, weeks, etc.), and may perform a payment function in an offline state by using the information pre-registered at the time of payment.

The offline payment method using the pre-register payment information may include two separate steps (e.g., register and pay). The electronic device may perform a step of pre-registering information for performing the payment function in the offline state with respect to a payment server (e.g., the payment server 420 of FIG. 4) while in an online state, and may perform a step of performing the payment function on the basis of the pre-registered payment information in the offline state. In various example embodiments of the present disclosure, an Internet connection between the electronic device 400 and the payment server may be requested only when the electronic device 400 registers an offline payment server.

In operation 1011, the electronic device 400 (e.g., the processor 120 of FIG. 1 or the processor 500 of FIG. 5) may perform a register service procedure for an offline payment in the payment server 420. The electronic device may generate pre-register payment information (e.g., a maximum payment amount, a validation period, etc.) to transmit it to the payment server 420. In operation 1013, the payment server 420 for receiving the pre-register payment information may deliver the received pre-register payment information (e.g., information including the maximum amount and the validation period) to the token server 430 to request for generation of a token. The token server 430 may generate the token for the offline payment on the basis of the pre-register payment information in operation 1015, and may deliver the generated token to the payment server 420 in operation 1017. In operation 1019, the payment server 420 may deliver the received token to the electronic device 400. For example, upon receiving the pre-register payment information for the offline payment in the electronic device 400, the payment server 420 and the token server 430 may generate the token on the basis of the received payment information, and may store the generated token into a dataset of the user. Upon receiving the token from the payment server 420, in operation 1021, the electronic device 400 may encrypt the received token, and may store the encrypted token into a local storage of the electronic device 400. According to one example embodiment, the electronic device 400 may generate a plurality of pieces of pre-register payment information for the offline payment, and may store tokens generated via the payment server 420 and the token server 430 into a local storage of the electronic device.

The electronic device 400 may transmit the pre-register payment information in the online state with respect to the payment server 420 while performing operation 1011 to operation 1021 to register the offline payment server, and may download a token generated on the basis of the pre-register payment information and store the token into the local storage.

In regards to a pay procedure, the electronic device 400 may perform a user authorization operation in operation 1051. The electronic device 400 may perform the user authorization by using a fingerprint or a Personal Identification Number (PIN). When the user authorization is achieved, in operation 1053, the electronic device 400 may display valid tokens stored in the local storage, and may select a token selected by the user as a payment token. If a contact or approach is recognized with respect to the POS 450, in operation 1055, the electronic device 400 may transmit the token to the POS 450 to pay for goods or services. The electronic device 400 may transmit the token to the POS 450 via an NFC (e.g., the NFC module 550 of FIG. 5) and/or an MST (e.g., the MST module 540 of FIG. 5).

In operation 1057, the POS 450 may transmit the token and payment information (e.g., a payment location, a payment data and time, a payment amount, etc.) to the financial server 440. Upon receiving the token from the POS 450, in operation 1059, the financial server 440 may transmit the token and payment information to the token server 430 to verify the token and payment information (e.g., a payment amount, a validation period, etc.). In operation 1061, the token server 430 may verify the token, and may compare a maximum amount of a registered payment with a total payment amount to be paid, on the basis of the payment information. If the token and the maximum amount are valid, in operation 1063, the token server 430 may transmit payment approval and Primary Account Number (PAN) information to the financial server 440. In operation 1065, the financial server 440 for receiving the payment approval may verify a credit of the user, and may perform the pay procedure with respect to related banks. In addition, in operation 1067, the financial server 440 may notify the payment approval to the POS 450. Then, the POS 450 may perform a payment processing operation, and may issue a receipt or the like.

As shown in operation 1051 to operation 1067 of FIG. 10, the electronic device 400 may transmit a valid token among pre-register tokens in an offline state with respect to the payment server 420 at the time of payment to the POS 450 to perform an offline payment operation.

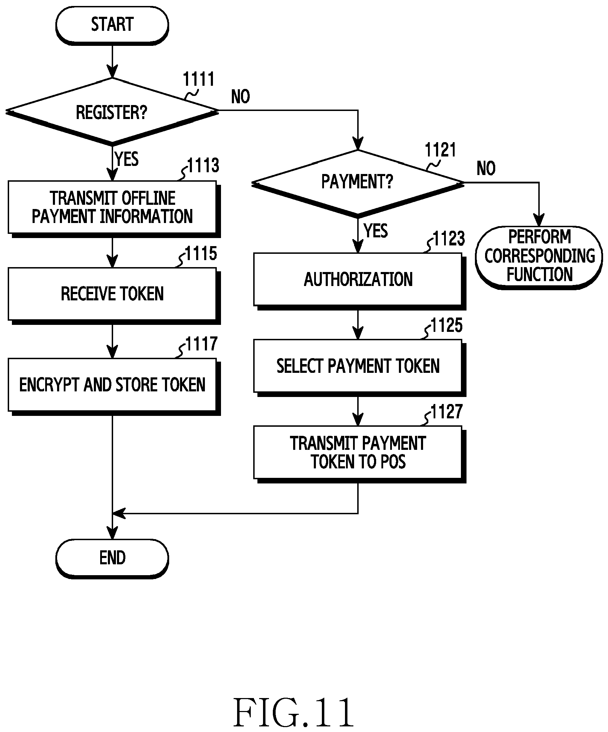

FIG. 11 is a flowchart illustrating an example offline payment operation of an electronic device according to various example embodiments of the present disclosure.

Referring to FIG. 11, the electronic device 400 may perform a pre-register procedure for an offline payment. If the offline payment is registered, the electronic device 400 (e.g., the processor 120 of FIG. 1 or the processor 500 of FIG. 5) may recognize this in operation 1111. In operation 1113, the electronic device 400 may transmit pre-register payment information including a maximum amount and a validation period to a payment server (e.g., the payment server 420 of FIG. 4. Then, the payment server 420 may request for generation of a token via the token server 430, and may deliver the token generated in the token server 430 to the electronic device 400. The electronic device 400 may receive the token in operation 1115, and may encrypt the received token and store it into a local storage in operation 1117.

A user may perform an offline payment operation at the time of payment. If the payment operation is recognized in operation 1121, the electronic device 400 may perform an authorization procedure by using a fingerprint, a password input, or the like in operation 1123. If the payment authorization is achieved, the electronic device 400 may select a valid token stored in the local storage in operation 1125, and may transmit the token selected in the POS to perform the offline payment operation in operation 1127.

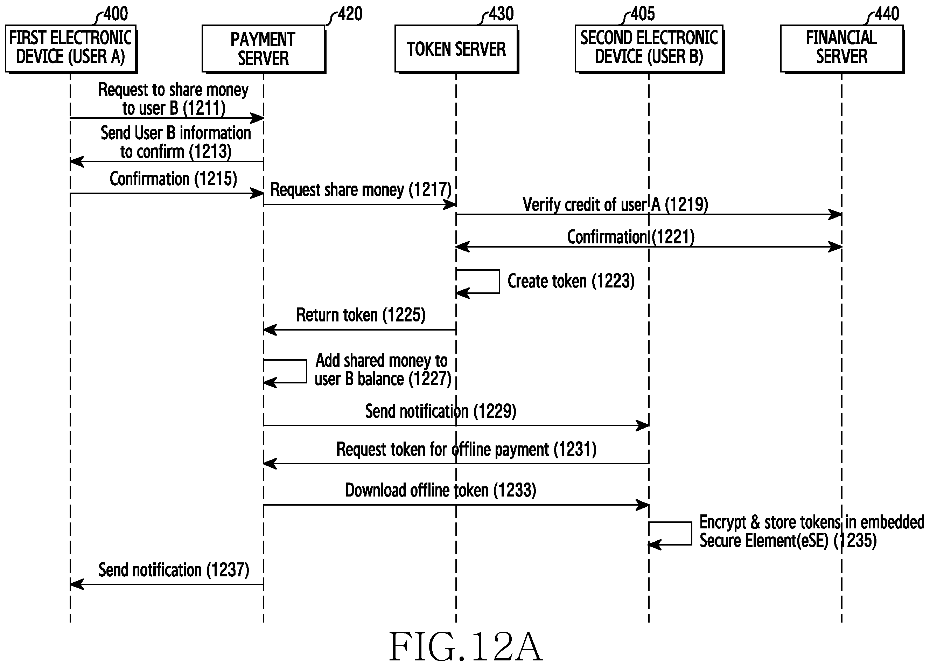

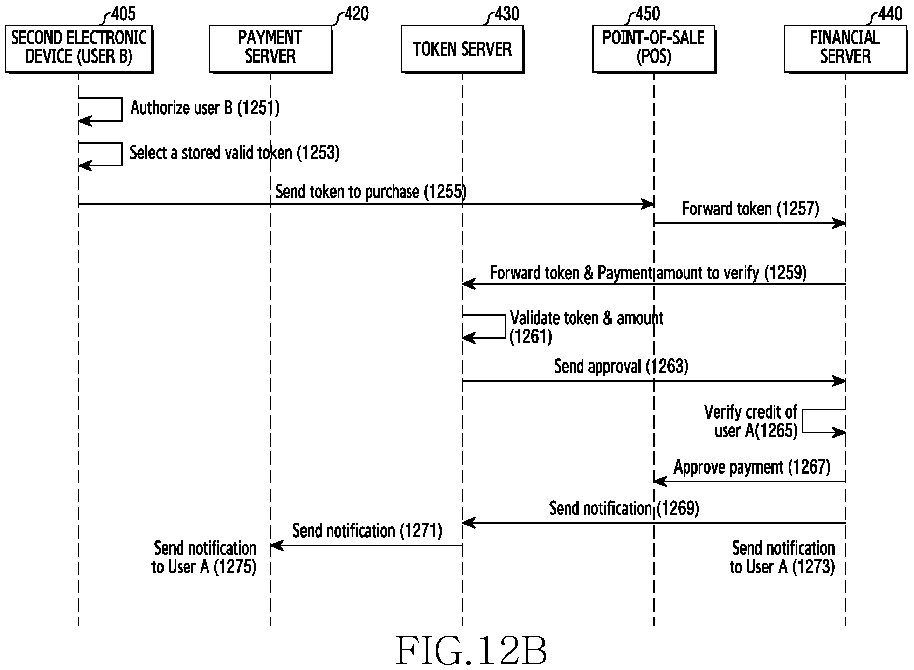

FIG. 12A and FIG. 12B are flowcharts illustrating a method of sharing postpaid money in a payment system according to various example embodiments of the present disclosure. According to an example embodiment, an electronic device (hereinafter, referring to as a first electronic device 400) may share postpaid money with another electronic device (hereinafter, referred to as a second electronic device 405). In a typical remittance procedure, if a transfer is achieved from an account of a sender to an account of a recipient, an amount of money may be immediately deducted by a transfer amount. Further, once the transfer is complete, the sender cannot estimate how the recipient has used the money. For example, if parents send money to their children, they cannot confirm payment details used by their children. Further, the sender cannot know a payment amount for goods or services purchased by the recipient.

FIG. 12A illustrates a procedure in which the first electronic device 400 sends post-money-share information to the second electronic device 405. In operation 1211, the first electronic device 400 may request the payment server 420 to register the post-money-share information. The post-money-share information may include card (e.g., credit card) information, a maximum payment, and a valid date. For example, when a payment performed by a user of the second electronic device 405 is greater than a limit money or is beyond the valid date, the first electronic device 400 may prevent the payment from being performed. When the post-money-share information is transmitted to the payment server 420, the first electronic device 400 may not set the maximum payment or may not set the valid date. In this case, the user of the second electronic device 405 may use money on the basis of a credit limit of the user or irrespective of the valid date. Upon receiving the request for the registration of the post-money-share information of the first electronic device 400, in operation 1213, the payment server 420 may request the first electronic device 400 to confirm details of the post-money-share information (e.g., an amount of postpaid money, a payment to be shared, a valid date, or the like of the second electronic device). In operation 1215, the first electronic device 400 may transmit to the payment server 420 information for confirming the confirmation request of the payment server 420.

Upon receiving the confirmation of the first electronic device 400, in operation 1217, the payment server 420 may request the token server 430 to generate a token for the post-money-share information. In operation 1219, the token server 430 may transmit the post-payment information requested by the first electronic device 400 to the financial server 440 to request for verification of a credit of the first electronic device 400. In operation 1221, the financial server 400 may verify the credit of the first electronic device 400 on the basis of the post-payment information requested by the first electronic device 400, and may transmit a verification result to the token server 430. For example, if the credit of the first electronic device 400 satisfies the requested post-money-share information, in operation 1221, the financial server 440 may transmit a confirmation signal to the PSN. If the post-money-share information is confirmed in the financial server 440, in operation 1223, the token server 430 may generate the token on the basis of the postpaid money information, and may store the generated token and money information into an internal dataset. In operation 1225, the token server 430 may deliver the generated token to the payment server 420. Upon receiving the token, the payment server 420 may add the post-payment information to be shared (e.g., money or the like) to a balance of the second electronic device 405 in operation 1227, and may send a notification corresponding to the added post-payment information to the second electronic device 405 in operation 1229.

Upon receiving the post-payment information to be shared from the payment server 320, in operation 1231, the second electronic device 405 may request the payment server 420 to transmit the token for an offline payment. When the token transmission is requested from the second electronic device 405, in operation 1233, the payment server 420 may transmit the generated token to the second electronic device 400 on the basis of the post-payment information. In operation 1235, the second electronic device 405 may encrypt the token to be downloaded, and may store the encrypted token into a local storage of the second electronic device 405.

The payment server 420 may transmit to the second electronic device 405 the token based on the post-payment information to be shared, and in operation 1237, may generate information regarding token delivery completion with respect to the post-payment information to be shared, and may send a notification corresponding thereto to the first electronic device 400. Then, the first electronic device 400 may confirm that the to-be-shared post-payment information requested by the first electronic device 400 is delivered to the second electronic device 405.

FIG. 12B illustrates an operation in which the second electronic device 405 pays for money shared by the first electronic device 400. The second electronic device 405 may use the shared money to purchase goods or services in an offline state. At the time of payment, the second electronic device 405 may perform an authorization (e.g., a fingerprint recognition or a PIN number input or the like) for the payment in operation 1251. If the authorization is successful, in operation 1253, the second electronic device 405 may select a valid token as a payment token. If a contact or approach is recognized with respect to the POS 450, in operation 1255, the second electronic device 405 may transmit the token to the POS 450 to pay for goods or services. The second electronic device 405 may transmit the token to the POS 450 via an NFC (e.g., the NFC module 550 of FIG. 5) and/or an MST (e.g., the MST module 540 of FIG. 5).

Upon receiving the token from the electronic device 400, in operation 1257, the POS 450 may transmit the received token and payment information (e.g., a payment location, a payment date and time, a payment amount, etc.) to the financial server 440. Upon receiving the token and the payment information from the POS 450, in operation 1259, the financial server 440 may transmit the token and the payment information to the token server 430 to verify the token. In operation 1261, the token server 430 may verify the token, and may compare a maximum amount of post-money-share information and a total amount of money to be paid on the basis of the payment information. For example, in operation 1261, the token server 430 may verify a validity of the token and whether the total payment amount is less than the total amount of money to be shared. If it is valid payment information, in operation 1263, the token server 430 may transmit payment approval and Primary Account Number (PAN) information to the financial server 440. In operation 1265, the financial server 440 for receiving the payment approval may verify a credit (e.g., the post-money-share information) of the first electronic device 400, and may perform the pay procedure with respect to related banks. In addition, in operation 1267, the financial server 440 may notify the payment approval to the POS 450. Then, the POS 450 may perform a payment processing operation, and may issue a receipt or the like. Further, the financial server 400 may send a feedback notification corresponding to a payment processing result to the token server 430 in operation 1269, the token server 430 may send the feedback notification to the payment server 420 in operation 1271, and the payment server 420 may send a notification corresponding to a payment processing result to the first electronic device 400 in operation 1275. Furthermore, in operation 1273, the financial server 440 and the PSN may send a notification corresponding to the processed payment result to the first electronic device 440.

If the shared postpaid money is paid by another electronic device 405, the payment processing result may be accumulated as processing details of the first electronic device 400, and the first electronic device 400 may confirm a payment result of the second electronic device 405 at the time of payment processing.

According to one example embodiment of the present disclosure, a postpaid-money-share method allows a user of the first electronic device 400 to share money that can be used during a specific duration with the second electronic device 405, so that a user of the second electronic device 405 can use the shared money. The user of the first electronic device 400 does not necessarily transfer money in advance to the user of the second electronic device 405, and the user of the second electronic device 405 may confirm a period and shared money and may use the shared money within a determined period. In addition, if the user of the second electronic device 405 pays for goods or services, a payment amount may be deducted from the shared money (e.g., a credit card of a sender), and usage details and the amount of money used in the second electronic device 405 may be transmitted to the first electronic device 400.

According to one example embodiment of the present disclosure, the postpaid-money-share method may allow a sender to share an income of the sender without having to expose sensitive information such as a card loan or cash to family members or friends. A recipient who does not have a card (e.g., a specific card) may be allowed to perform a payment by using a card of the sender. Payments performed by the recipient may be counted as a cost (e.g., goods for tax clearance) of the sender, and thus the sender may have a benefit based on card usage details for which a payment is performed by the recipient and which are postpaid by being shared.

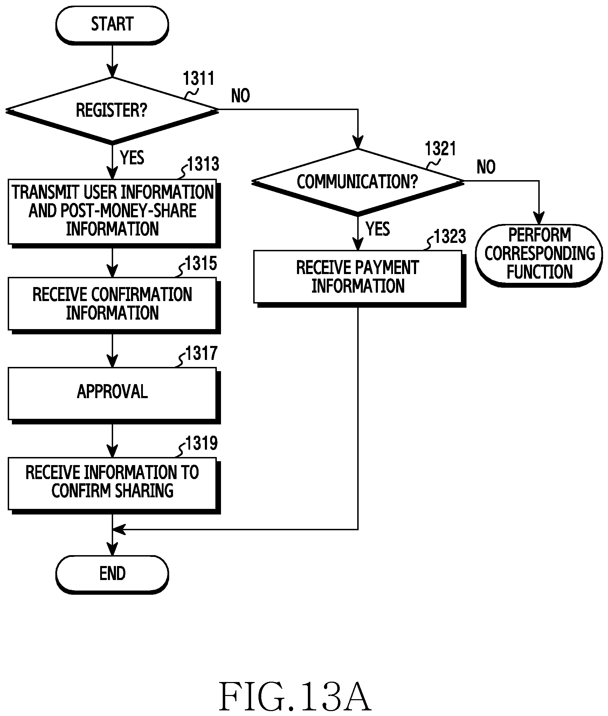

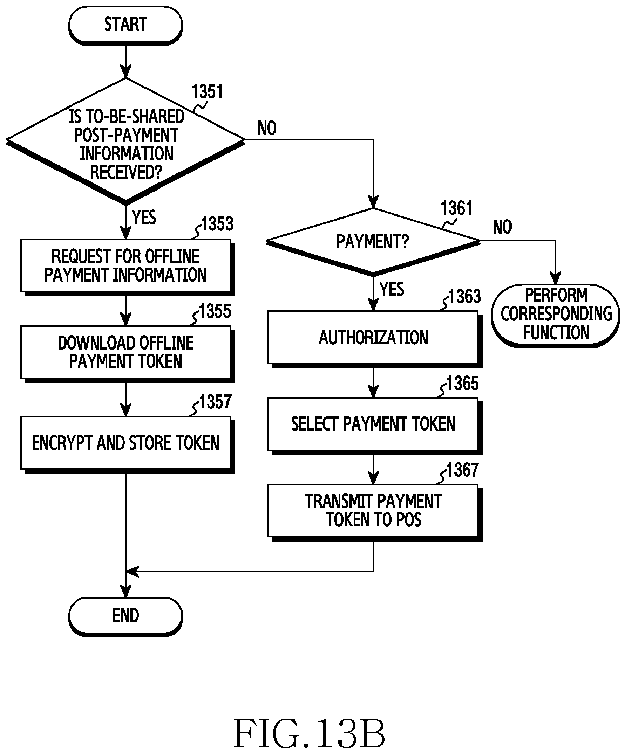

FIG. 13A and FIG. 13B are flowcharts illustrating an example method in which a first electronic device sets post-money sharing, and a second electronic device performs a payment by using the post-money sharing according to various example embodiments of the present disclosure. The first electronic device may be a device for post-money sharing with the second electronic device, and the second electronic device may be a device capable of performing a payment by using the post-money sharing.

FIG. 13A is a flowchart illustrating an example method of setting post-money sharing and processing a payment in a first electronic device. In operation 1311, the first electronic device may recognize that post-payment information to be shared is registered. In operation 1313, the first electronic device may transmit the post-payment information to be shared to the payment server 420. The post-payment information to be shared with the second electronic device may be information including card information, a maximum amount, and a valid date. When the registration of the post-payment information to be shared is requested, the payment server 420 may request the first electronic device to confirm this, and in operation 1315, the first electronic device may receive confirmation request information transmitted from the PSN. Upon receiving the confirmation request information, in operation 1317, the first electronic device may transmit confirmation information based on the confirmation request to the payment server 420.

The post-payment information of the first electronic device may be delivered to the financial server 440 via the payment server 420 and the token server 430. The financial server 440 may analyze a credit of the first electronic device on the basis of the post-payment information. The token server 430 may generate a token on the basis of the post-payment information. If the token is normally verified and generated, the payment server 420 may notify this to the first electronic device and the second electronic device. In operation 1319, the first electronic device may receive confirmation information indicating that it is shared with the second electronic device. If the second electronic device for sharing the post-payment information performs a payment operation by using the shared money, the payment server 420 may transmit the payment information by being connected with the first electronic device. Therefore, if it is connected to the payment server 420 via the communication module, the first electronic device may recognize this in operation 1321, and may receive a payment processing result of the second electronic device in operation 1323. Therefore, the first electronic device may share money that can be paid by a postpaid-money-share function with the second electronic device. In addition, when the second electronic device performs the payment operation by using the shared money, the first electronic device may confirm usage details for which a payment is performed by the second electronic device at the time of payment.

FIG. 13B is a flowchart illustrating an example payment operation performed by a second electronic device by using shared postpaid money. If the registration of the post-payment information to be shared is requested from the first electronic device, the payment server 420 may add an amount of money of the second electronic device on the basis of the post-payment information, and may send a notification corresponding to information on the shared postpaid money to the second electronic device. The second electronic device may perform an online payment or an offline payment by using the information on the shared postpaid money.

In an example embodiment, the second electronic device may perform the offline payment. Upon recognizing the reception of the post-payment information to be shared in operation 1351, the second electronic device may request the payment server 420 to transmit a token for the offline payment in order to perform the offline payment in operation 1353. The payment server 420 may transmit the token generated in the token server 430 to the second electronic device in response to the token request of the second electronic device. The second electronic device may download the token transmitted from the payment server 420 in operation 1355, and may encrypt the downloaded toke and store the encrypted token into a local storage in operation 1357.

The second electronic device may perform the offline payment using the token stored in the local storage at the time of payment. If a payment request is generated by the user, the second electronic device may recognize this in operation 1361, and may perform a payment authorization procedure in operation 1363. The payment authorization may be performed on the basis of a fingerprint input or a PIN input. If the payment authorization is achieved, the second electronic device may select the stored valid token in operation 1365, and may transmit the selected token to the POS in operation 1367. Therefore, the second electronic device may pay the shared postpaid money in an offline payment manner.

The user may own a plurality of credit cards for various purposes. The credit cards may give different benefits to a payment amount and/or a payment item or the like. Therefore, it may be preferable for the user to perform a payment by selecting a card having a best payment benefit. According to various example embodiments of the present disclosure, a payment system may propose the user to select a best card for the payment by using a predetermined method (e.g., a payment card preference and/or a payment model).

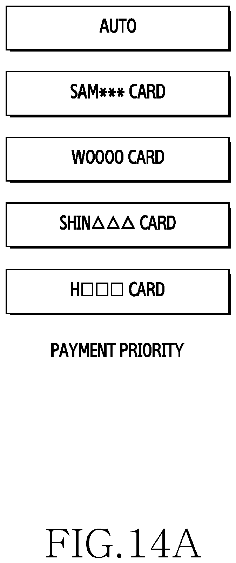

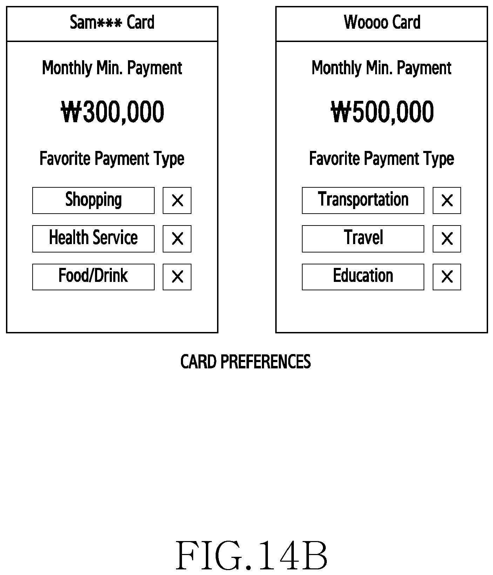

According to one example embodiment, the payment system may propose to select a payment card on the basis of the payment card preference. FIG. 14A to FIG. 14C are diagrams illustrating an example of selecting a credit card based on payment and card preferences. When an electronic device is used for a payment, a user may configure a card having a payment priority as shown in FIG. 14A. Further, in order to provide a benefit such as accumulation points or a bill discount as shown in FIG. 14B, credit card issuers may request customers to perform at least a monthly minimum payment by using a corresponding credit card. In addition, as shown in FIG. 14B, the cards may have favorite payment types for a benefit (e.g., an accumulation point) in the cards.

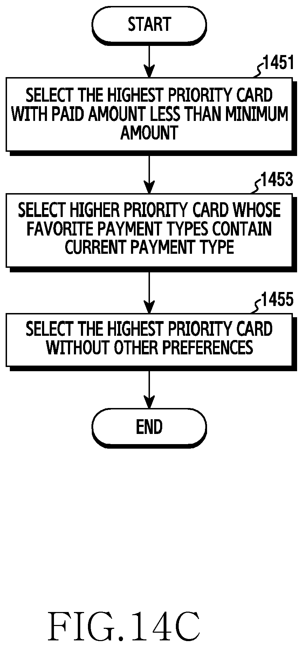

The payment system may select a card having a top priority (e.g., a priority of FIG. 14A) from cards of which a total payment amount does not exceed a minimum usage amount among cards which require a payment greater than or equal to a minimum amount as shown in FIG. 14B (e.g., cards in which a minimum usage amount is set as shown in FIG. 14B). Further, as shown in FIG. 14B, the payment system may select a card having a priority of a type with a best payment condition among current payment types. Furthermore, the payment system may select the card having the top priority irrespective of a preference. In one example embodiment, the payment system may select the payment card by using the method illustrated in FIG. 14C. In operation 1451, the payment system may select the card having the top priority among cards of which an accumulation payment amount is less than a minimum usage amount. In addition, if an accumulation payment amount of all cards exceeds the minimum usage amount, in operation 1453, the payment system may select a card using a best payment method (e.g., a card for giving a best benefit at the time of payment) among the current payment types. In addition, if the card is not selected in operation 1451 and operation 1453, the payment system may select the card having the top priority in operation 1455.

According to one example embodiment, for each card owned by the user, the payment system may register a payment priority, a minimum payment amount, a favorite payment, or the like to the PSN. If the user registers a first card preference, the PSN may propose to select a payment card according to the minimum payment amount and the favorite payment type from a predetermined dataset. When the payment is achieved in the POS of the payment system, the user may report this to the PSN to select a specific card for the payment or to select the best card according to a pre-registered preference, and the PSN may select the payment card by using the method of FIG. 14C.

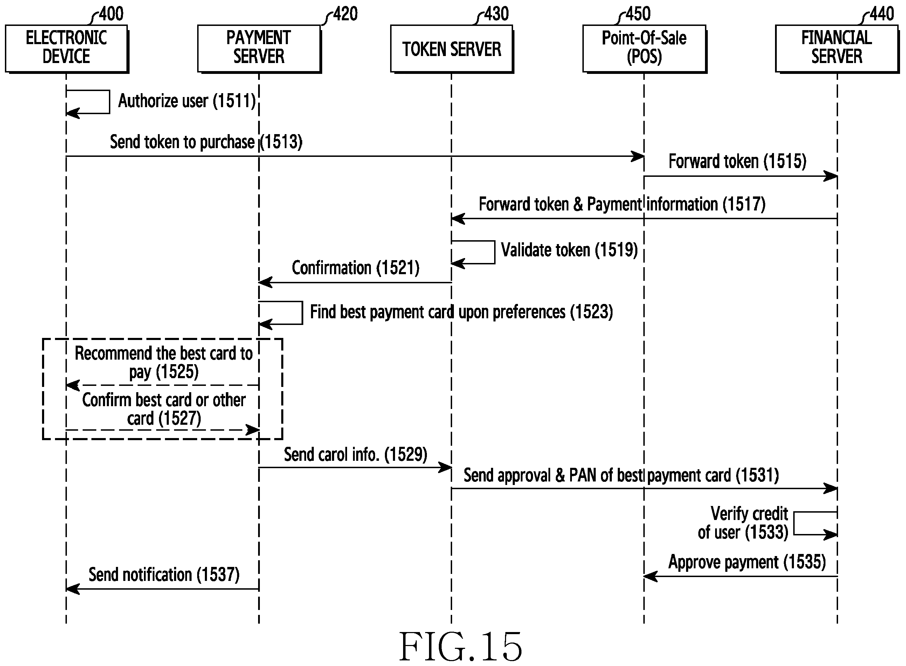

FIG. 15 is a flowchart illustrating an example method in which a payment system selects a card to pay according to various example embodiments of the present disclosure.

Referring to FIG. 15, the electronic device 400 may perform a user authorization operation in operation 1511. The electronic device 400 may perform the user authorization by using a fingerprint or a Personal Identification Number (PIN). When the user authorization is achieved, the electronic device may perform a payment operation. In this case, if a contact or approach is recognized with respect to the POS 450, in operation 1513, the electronic device 400 may transmit a token to the POS 450 to pay for goods or services. The electronic device 400 may transmit the token to the POS 450 via an NFC (e.g., the NFC module 550 of FIG. 5) and/or an MST (e.g., the MST module 540 of FIG. 5). In this case, the token to be delivered to the POS 450 may not include information regarding the payment card.

Upon receiving the token from the electronic device 400, in operation 1515, the POS 450 may transmit the received token and payment information to the financial server 440. Upon receiving the token and the payment information from the POS 450, in operation 1517, the financial server 440 may transmit the token and the payment information to the token server 430. In operation 1519, the token server 430 may analyze whether the received token is a valid token. If it is the valid token, in operation 1521, the token server 430 may deliver the payment information to the payment server 420. In operation 1523, the payment server 420 for receiving the payment information may find a best payment card upon preferences on the basis of the payment information. As shown in FIG. 14A to FIG.14C, the payment server 420 may select a card priority, whether a payment accumulation amount of cards exceeds a minimum usage price of a corresponding card, and/or a card for providing a best benefit in a payment type in operation 1525 and the electronic device 400 may confirm the selected card or another card to the payment server in operation 1527. According to one example embodiment, the payment server 420 may select a best card by using the method of FIG.14C. After selecting the best card, in operation 1529, the payment server 420 may deliver selected card information to the token server 430. In operation 1531, the token server 430 for receiving best card information may transmit a payment approval and selected payment card information (e.g., a primary account number (PAN) of best payment card) to the financial server 440. In operation 1533, the financial server 440 for receiving the payment approval may verify a credit of the user, and may perform the pay procedure with respect to related banks. In addition, in operation 1535, the financial server 440 may notify the payment approval to the POS 450. Then, the POS 450 may perform a payment processing operation, and may issue a receipt or the like. In addition, in operation 1537, the PSN may notify information of the payment card to the electronic device 400. In operation 1533, the user of the electronic device 400 may confirm information of a card used in the payment.

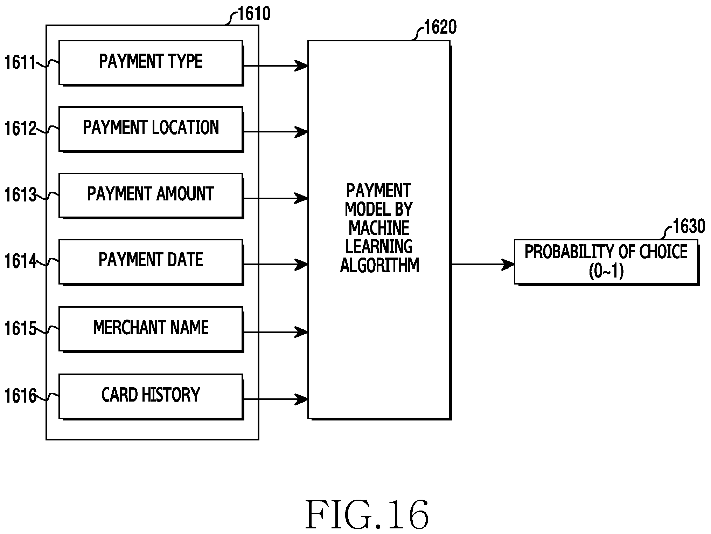

After the best card is selected, the PSN may further include a procedure of reporting the selected best card to the user of the electronic device 400 to confirm whether the card is used. After the best card is selected, in operation 1525, the payment server 420 may transmit information of the selected best payment card to the electronic device 400. For example, the payment server 420 may recommend the user to use the selected best card to pay. The user of the electronic device 400 may confirm the payment card proposed in the payment server 420. The user of the electronic device may use the best card proposed in the payment server 420 as the payment card, or may use another card selected by the user as the payment card. In operation 1527, the electronic device may transmit confirmation information including information of the card selected by the user (e.g., the best card recommended in the payment server 420 or another card selected by the user) to the payment server 420. In operation 1529, the payment server 420 for receiving the card confirmation information of the electronic device 400 may deliver card information to the token server 430. In operation 1531, the token server 430 for receiving the best card information may transmit a payment approval and selected payment card information (e.g., a primary account number of best payment card) to the financial server 440. FIG. 16 illustrates a method of selecting a payment card in a payment system according to various example embodiments of the present disclosure.

Referring to FIG. 16, when a card payment is performed, a card having a good payment condition may be selected according to a payment condition to perform the payment. A user may select the card having the good condition at the time of payment. However, the user may not desire to consume a time to set a preference before the payment. According to various example embodiments of the present disclosure, the payment system may provide a method capable of recommending a best card having a best payment condition to a card user on the basis of an overall payment history. According to one example embodiment, the payment system may use a payment modeling method, and the payment modeling method may be executed on the basis of a learning machine process. When the user uses a PSN for the payment, payment information of the user may be maintained as anonymous in the payment system to protect a privacy of the user. For the payment history for all users in the payment system, the PSN may generate a payment model for each specific payment card as shown in the method of FIG. 15 (e.g., payment modeling of payment card).

In FIG. 16, a parameter collector 1610 may collect parameters for performing payment modeling of the payment card. The payment parameter may include at least one of a payment type 1611, a payment location 1612, a payment amount 1613, a payment date 1614, a merchant name 1615, and a card history 1616. The payment type 1611 may be a product type. For example, the product type may be food, shopping, or the like. The payment location 1612 may be a POS ID. The merchant name 1615 may be a name of a merchant in which a card is used for a payment, for example, a department store (e.g., Shinsegae Department Store), a discount store (e.g., E-Mart), a movie theater (e.g., Megabox), an amusement park (e.g., Everland), or the like. The card history 1616 may collect information (e.g., a discount event, or the like) provided in companies of the merchant name 1615.

A learning unit (e.g., a payment model by machine learning algorithm) 1620 may learn by applying payment modeling to the payment parameters. A selecting unit (e.g., a probability of choice) 1630 may select a card having a highest probability of a best card on the basis of the payment modeling.

According to one example embodiment, when the user (e.g., a new comer) requests for selection of the best card for the payment, the payment server 420 may apply the payment model (e.g., the payment model by machine learning algorithm) to all cards of the user to obtain a probability of choice (Pi) for each payment card. If a greatest probability of choice (Pi) is discovered, the payment server 420 may propose the correct best card to the new user not having a user's payment history.

According to one example embodiment, the payment server 420 may transmit a proposed card to the user through a push message, and may obtain information from the user. For further more payment history received from the user, the payment server 420 may generate a more accurate payment model.

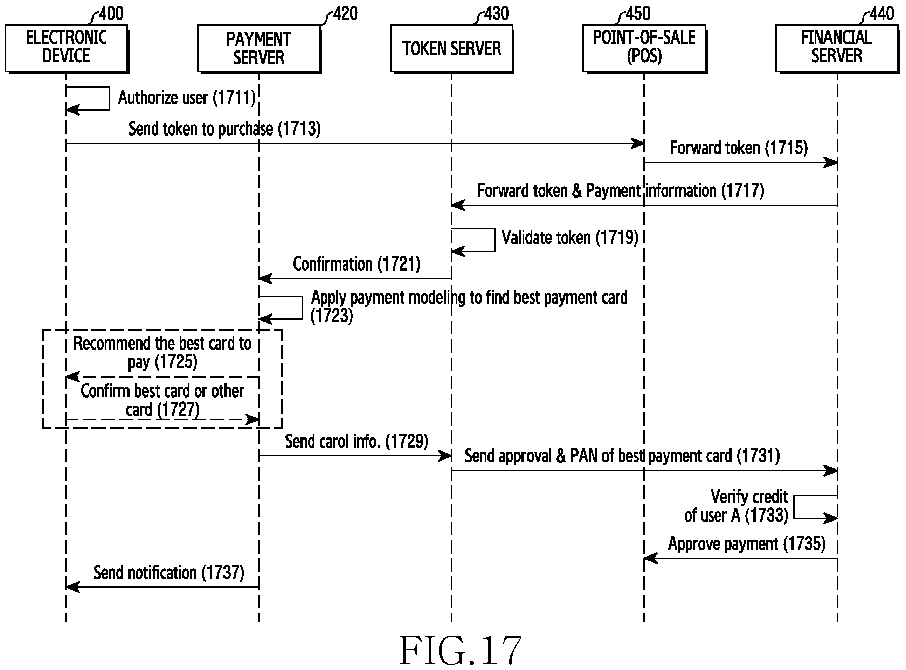

FIG. 17 is a flowchart illustrating an example procedure of performing a payment operation using a best card through a payment modeling scheme in a payment system according to various example embodiments of the present disclosure.

Referring to FIG. 17, the electronic device 400 may perform a user authorization operation in operation 1711. The electronic device 400 may perform the user authorization by using a fingerprint or a Personal Identification Number (PIN). When the user authorization is achieved, in operation 1713, the electronic device may transmit a token to the POS 450 to pay for goods or services. The electronic device 400 may transmit the token to the POS 450 via an NFC (e.g., the NFC module 550 of FIG. 5) and/or an MST (e.g., the MST module 540 of FIG. 5). In this case, the token to be delivered to the POS 450 may include information for requesting selection of a best card having a good payment condition for the payment.

Upon receiving the token from the electronic device 400, in operation 1715, the POS 450 may transmit the received token and payment information to the financial server 440. Upon receiving the token and the payment information from the POS 450, in operation 1717, the financial server 440 may transmit the token and the payment information to the token server 430. In operation 1719, the token server 430 may analyze whether the received token is a valid token. If it is the valid token, in operation 1721, the token server 430 may deliver the payment information to the payment server 420. In operation 1723, the payment server 420 may apply the payment modeling method of FIG. 16 to select the best payment card on the basis of the payment information. If the user of the electronic device 400 requests the payment server 420 to select the best card for the payment, the payment server 420 may apply the payment model to all cards of the user to obtain a probability of choice (Pi) for each payment card. If the greatest probability of choice (Pi) is discovered, the payment server 420 may select the best card having a best payment condition for the electronic device 400 on the basis of the payment modeling scheme. After selecting the best card, in operation 1729, the payment server 420 may transmit a payment approval and selected payment card information (e.g., a primary account number of best payment card) to the financial server 440. In operation 1733, the financial server 440 for receiving the payment approval may verify a credit of the user, and may perform the pay procedure with respect to related banks. In addition, in operation 1735, the financial server 440 may notify the payment approval to the POS 450. Then, the POS 450 may perform a payment processing operation, and may issue a receipt or the like. In addition, the payment server 420 may notify information of the payment card to the electronic device 400 in operation 1737, and the user of the electronic device 400 may confirm information of a card used in the payment in operation 1737.

After the best card is selected, the payment server 420 may further include a procedure of reporting the selected best card to the user of the electronic device 400 to confirm whether the card is used. After the best card is selected, in operation 1725, the payment server 420 may transmit information of the selected best payment card to the electronic device 400. For example, the payment server 420 may recommend the user to use the selected best card to pay. The user of the electronic device 400 may confirm the payment card proposed in the payment server 420. The user of the electronic device may use the best card proposed in the payment server 420 as the payment card, or may use another card selected by the user as the payment card. In operation 1727, the electronic device 400 may transmit confirmation information including information of the card (e.g., the best card proposed in the payment server 420 or another card selected by the user) to the payment server 420. In operation 1729, the payment server 420 may transmit the card confirmation information of the electronic device 400 to the token server. In operation 1731, the token server 430 may transmit a payment approval and selected payment card information (e.g., a primary account number of best payment card) to the financial server 440. According to various example embodiments of the present disclosure, a method of operating an electronic device may include a payment information register operation for requesting for an offline payment registration by transmitting an IDentification (ID) of a One Time Password (OTP) module for an offline payment, receiving an account ID based on the transmission of the OTP ID, and storing the account ID, and an offline payment operation for generating the OTP at the time of the offline payment, generating a token on the basis of the generated OTP and the account ID, and transmitting the generated token to a Point On Sale (POS) terminal.

The payment information register operation may further include authorizing a user on the basis of a finger print or a Personal Identification Number (PIN).

The offline payment operation may include generating, by the OTP module, the OTP on the basis of a current time at the time of the offline payment, and generating the token by combining the generated OTP and the stored account information.

In the offline payment operation, upon sensing a contact or approach of the POS terminal, the payment token may be transmitted to the POS terminal via a Near Field Communication (NFC) module and a Magnetic Secure Transmission (MST) module.

The payment information register operation may further include generating payment information and transmitting the generated payment information to request for a pre-registration, and receiving and storing a token based on the requested payment information. The offline payment operation may further include selecting the token at the time of payment, and transmitting the selected token to the POS terminal to perform the payment.

The payment information may include information on a maximum payment amount and a validation period.

According to various example embodiments of the present disclosure, a method of processing an offline payment of an electronic device by a payment service system may include a payment register operation for transmitting an account IDentification (ID) corresponding to a One Time Password (OTP) module to the electronic device upon receiving the ID of the OTP module from the electronic device, and for storing the transmitted account ID, and an offline payment operation for verifying the OTP and the account ID upon receiving a token comprising the OTP and the account ID, and for approving the payment if the token is valid.

The offline payment operation may include obtaining the account ID and the OTP from the received token, generating a local OTP on the basis of the OTP module ID depending on the stored account ID, and approving the payment if the OTP included in the token is identical to the generated local OTP.

The payment information register operation may further include, if a pre-registration of the payment information is requested from the electronic device, storing the payment information into a dataset of the user and generating a token on the basis of the received payment information, and transmitting the generated token to the electronic device. The offline payment operation may further include analyzing information of the received token and the payment information stored in the dataset of the user to determine whether the payment is approved.

The payment information to be pre-registered may include a maximum amount and a validation period. The offline payment operation may approve the payment if a total amount of money to be paid is less than a maximum payment amount.

According to various example embodiments, an electronic device may perform an offline payment to support a payment service irrespective of a communication region. The electronic device may register post-payment information to be shared with other users, and may confirm a result based on payments of other users. The electronic device may receive card information related to the payment at the time of payment and thus perform the payment by selecting a favorite card for the payment.

## Claims

1. An electronic device comprising:
a communication module comprising communication circuitry;
a short-range communication module comprising short-range communication circuitry;
a One Time Password (OTP) module comprising circuitry configured to generate an OTP; and
a processor operatively coupled to the communication module and the short-range communication module,
wherein the processor is configured to:
request an offline payment registration by transmitting an IDentification (ID) of the OTP module via the communication module, receive an account ID based on the offline payment registration, and store the account ID; and
generate the OTP via the OTP module at a time of an offline payment, generate a token based on the generated OTP and the account ID, and transmit the generated token to a Point On Sale (POS) terminal via the short-range communication module to perform a payment.

2. The electronic device of claim 1, wherein the OTP module is configured to generate the OTP in a time synchronization manner.

3. The electronic device of claim 2,
wherein the OTP module is configured to generate the OTP based on a current time at the time of the offline payment, and
wherein the processor is configured to generate a payment token by combining the generated OTP and the stored account ID.

4. The electronic device of claim 1, further comprising an authorization module comprising circuitry configured to authorize the user, wherein the processor is configured to authorize the user based on a Personal Identification Number (PIN) or a fingerprint input in the authorization module at the time of the offline payment.

5. The electronic device of claim 1,
wherein the short-range communication module comprises at least one of: a Near Field Communication (NFC) module comprising NFC circuitry, and a Magnetic Secure Transmission (MST) module comprising MST circuitry, and
wherein the processor is configured to transmit the token to the POS terminal upon sensing a contact or proximity of the POS terminal via the short-range communication module.

6. The electronic device of claim 1, wherein the processor is configured to:
generate payment information, request a pre-registration of the payment information generated via the communication module, and receive and store a token of the pre-registered payment information via the communication module; and
the processor is further configured to select the token at the time of payment, and transmit the selected token to the POS terminal via the short-range communication module to perform the payment.

7. The electronic device of claim 6, wherein the payment information comprises information of a maximum payment amount and a validation period.

8. The electronic device of claim 1,
wherein the electronic device comprises a first electronic device configured to provide post-payment information and a second electronic device configured to perform a payment operation using the provided post-payment information, and
wherein a processor of the first electronic device is configured to:
generate the post-payment information to be shared with the second electronic device, and transmit the generated post-payment information via the communication module to share the post-payment information with the second electronic device; and
to display a result of the payment performed by the second electronic device by the use of the shared post-payment information by receiving the result via the communication module.

9. The electronic device of claim 8, wherein a processor of the second electronic device is configured to:
share the post-payment information provided from the first electronic device, request a token for an offline payment via the communication module, and store the token received via the communication module; and
to select the token at the time of payment, and transmit the selected token to the POS terminal via the short-range communication module to perform the payment.

10. The electronic device of claim 9, wherein the post-payment information comprises a maximum payment amount and a validation period.

11. A method of operating an electronic device, the method comprising:
a payment information register operation comprising: requesting an offline payment registration by transmitting an IDentification (ID) of a One Time Password (OTP) module for an offline payment; receiving an account ID based on the transmission of the OTP ID; and storing the account ID; and
an offline payment operation comprising: generating the OTP at the time of an offline payment; generating a token based on the generated OTP and the account ID; and transmitting the generated token to a Point On Sale (POS) terminal.

12. The method of claim 11, wherein the payment information register operation further comprises authorizing a user based on a fingerprint or a Personal Identification Number (PIN).

13. The method of claim 11, wherein the offline payment operation further comprises:
generating, by the OTP module, the OTP based on a current time at the time of the offline payment; and
generating the token by combining the generated OTP and the stored account information.

14. The method of claim 11, wherein in the offline payment operation, upon sensing a contact or proximity of the POS terminal, the payment token is transmitted to the POS terminal via at least one of: a Near Field Communication (NFC) module and a Magnetic Secure Transmission (MST) module.

15. The method of claim 11,
wherein the payment information register operation further comprises:
generating payment information, and transmitting the generated payment information to request a pre-registration; and
receiving and storing a token based on the requested payment information, and
wherein the offline payment operation further comprises:
selecting the token at the time of payment; and
transmitting the selected token to the POS terminal to perform the payment.
